# EUROPEAN PATENT APPLICATION

(11) **EP 4 808 007 A1**
(43) Date of publication of application: **16.09.2026**
(21) Application number: 24887890.2
(22) Date of filing: 04.11.2024
(51) Int. Cl.: H04B 7/0456

(54) **INFORMATION PROCESSING METHOD AND APPARATUS**

(30) Priority: 07.11.2023 CN 202311475128
(71) Applicant: Datang Mobile Communications Equipment Co., Ltd., Beijing 100085 (CN)
(72) Inventor: HUANG, Qiuping, Beijing 100085 (CN); GAO, Qiubin, Beijing 100085 (CN)
(74) Representative: dompatent
(86) International application number: PCT/CN2024/129615
(87) International publication number: WO 2025/098278

(57) **Abstract**

The present disclosure provides an information processing method and apparatus. The method according to an embodiment of the present disclosure includes: determining first information corresponding to Channel State Information (CSI), where the first information is used to indicate one or more of quality of the CSI, quality of a channel or a channel estimation value corresponding to the CSI, and quality of a precoding matrix corresponding to the CSI; determining whether to send CSI feedback information to a second device and/or determining the CSI feedback information to be sent to the second device based on the first information.

## Description

### CROSS-REFERENCE TO RELATED APPLICATION

This disclosure claims the priority to the Chinese patent application with the application number 202311475128.9 and the title of "INFORMATION PROCESSING METHOD AND APPARATUS" filed with the China Patent Office on November 07, 2023, the entire content of which is incorporated herein by reference.

### TECHNICAL FIELD

This disclosure relates to the technical field of communications, and in particular, to an information processing method and apparatus.

### BACKGROUND

In the related art, for a given Channel State Information (CSI) reporting configuration, a terminal or a User Equipment (UE) needs to feed back corresponding CSI. For a system performing CSI feedback based on Artificial Intelligence (AI)/Machine Learning (ML), when ground-truth CSI is used for performance monitoring or model training, if the quality of the ground-truth CSI is low, the performance monitoring performed by using such low-quality ground-truth CSI may also be inaccurate, or an AI/ML model trained by using such low-quality samples may be difficult to ensure good performance. Therefore, reporting the above-mentioned low-quality CSI may cause a waste of resources.

### SUMMARY

An objective of this disclosure is to provide an information processing method and apparatus to solve the problem of resource waste caused by reporting low-quality CSI.

To achieve the above objective, this disclosure provides an information processing method, performed by a first device, the method including:
determining first information corresponding to Channel State Information (CSI), wherein the first information is used to indicate one or more of quality of the CSI, quality of a channel or a channel estimation value corresponding to the CSI, and quality of a precoding matrix corresponding to the CSI;
determining whether to send CSI feedback information to a second device and/or determining the CSI feedback information to be sent to the second device based on the first information.

In some embodiments, the method further comprises:
receiving a first reference signal;
determining the CSI based on the first reference signal.

In some embodiments, the determining first information corresponding to Channel State Information (CSI) comprises:
determining the first information corresponding to the CSI based on configuration information of the first reference signal and/or a second reference signal.

In some embodiments, the determining whether to send CSI feedback information to a second device and/or determining the CSI feedback information to be sent to the second device based on the first information comprises:
in a case where the first information meets a first condition, not sending the CSI feedback information to the second device or determining that the CSI feedback information to be sent to the second device does not include the CSI;
in a case where the first information meets a second condition, determining to send the CSI feedback information to the second device or determining that the CSI feedback information to be sent to the second device includes the CSI.

In some embodiments, the CSI feedback information comprises first indication information, and the first indication information is used to indicate whether the CSI feedback information includes the CSI.

In some embodiments, the first condition comprises:
a relative relationship between the first information and a first threshold or first reference quality information meets a first relationship;
and/or the second condition comprises:
   a relative relationship between the first information and a second threshold or second reference quality information meets a second relationship.

In some embodiments, the determining the CSI feedback information to be sent to the second device based on the first information comprises:
determining at least one of a codebook parameter, a codebook, or a payload size in the CSI feedback information based on the first information.

In some embodiments, the determining whether to send CSI feedback information to a second device and/or determining the CSI feedback information to be sent to the second device based on the first information comprises:
determining whether to send the CSI feedback information to the second device and/or determining the CSI feedback information to be sent to the second device based on the first information and a first parameter;
wherein the first parameter comprises at least one of the following:
configuration information of a first reference signal, wherein the first reference signal is a reference signal used to determine the CSI;
position information of the first device;
speed information of the first device.

In some embodiments, the determining the CSI feedback information to be sent to the second device based on the first information and a first parameter comprises:
determining at least one of a codebook parameter, a codebook, or a payload size in the CSI feedback information based on the first information and the first parameter.

In some embodiments, the CSI feedback information comprises second indication information, and the second indication information is used to indicate at least one of a codebook parameter, a codebook, or a payload size.

In some embodiments, the method further comprises:
sending the first information.

In some embodiments, the first information comprises at least one of the following:
channel quality information;
channel information;
quality level information;
error information.

In some embodiments, the channel quality information comprises at least one of the following:
Signal-to-Interference-Noise Ratio (SINR) or Signal-to-Noise Ratio (SNR);
Reference Signal Received Power (RSRP);
Channel Quality Indicator (CQI).

In some embodiments, the channel information comprises information used to indicate at least one of the following corresponding to a channel:
delay spread;
angle spread;
average delay;
Doppler;
Doppler spread;
Mean Square Error (MSE);
Normalized Mean Square Error (NMSE);
channel statistics;
distribution information of the channel.

In some embodiments, the error information comprises at least one of the following:
error information of the CSI;
error information of a channel or a channel estimation value corresponding to the CSI;
error information of a precoding matrix corresponding to the CSI.

In some embodiments, the error information comprises at least one of the following:
distance error;
MSE, NMSE, or Minimum Mean Square Error (MMSE);
error information of the CQI;
error information of channel statistics.

In some embodiments, the CSI feedback information comprises CSI feedback information corresponding to the CSI.

Embodiments of this disclosure further provide an information processing method, performed by a second device, the method comprising:
determining CSI feedback information and/or whether the CSI feedback information exists based on configuration information of a first reference signal, a CSI feedback configuration corresponding to the first reference signal and/or first information;
wherein the first information is used to indicate one or more of quality of CSI, quality of a channel or a channel estimation value corresponding to the CSI, and quality of a precoding matrix corresponding to the CSI.

In some embodiments, the CSI feedback information comprises at least one of the following:
a codebook parameter;
a codebook;
a payload size.

In some embodiments, the method further comprises:
obtaining the first information sent by a first device.

In some embodiments, the first information is first information corresponding to the configuration information of the first reference signal and/or the CSI feedback configuration corresponding to the first reference signal.

In some embodiments, the determining CSI feedback information and/or whether the CSI feedback information exists based on the first information comprises:
in a case where the first information meets a first condition, determining that no CSI feedback information exists or determining that the CSI feedback information does not include the CSI corresponding to the first information;
in a case where the first information meets a second condition, determining that the CSI feedback information exists or determining that the CSI feedback information includes the CSI corresponding to the first information.

In some embodiments, the CSI feedback information comprises first indication information, and the first indication information is used to indicate whether the CSI feedback information includes the CSI.

In some embodiments, the first condition comprises:
a relative relationship between the first information and a first threshold or first reference quality information meets a first relationship;
and/or the second condition comprises:
   a relative relationship between the first information and a second threshold or second reference quality information meets a second relationship.

In some embodiments, the determining CSI feedback information and/or whether the CSI feedback information exists based on configuration information of a first reference signal, a CSI feedback configuration corresponding to the first reference signal and/or first information comprises:
determining the CSI feedback information and/or whether the CSI feedback information exists based on at least one of the configuration information of the first reference signal, the CSI feedback configuration corresponding to the first reference signal or the first information, and a second parameter;
wherein the second parameter comprises at least one of the following:
position information of a first device;
speed information of the first device.

In some embodiments, the determining the CSI feedback information based on at least one of the configuration information of the first reference signal, the CSI feedback configuration corresponding to the first reference signal or the first information, and a second parameter comprises:
determining at least one of a codebook parameter, a codebook, or a payload size in the CSI feedback information based on at least one of the configuration information of the first reference signal, the CSI feedback configuration corresponding to the first reference signal or the first information, and the second parameter.

In some embodiments, the CSI feedback information comprises second indication information, and the second indication information is used to indicate at least one of a codebook parameter, a codebook, or a payload size.

In some embodiments, the method further comprises at least one of the following:
sending the first reference signal and/or a second reference signal;
sending configuration information of the first reference signal.

In some embodiments, the first information comprises at least one of the following:
channel quality information;
channel information;
quality level information;
error information.

In some embodiments, the channel quality information comprises at least one of the following:
Signal-to-Interference-Noise Ratio (SINR) or Signal-to-Noise Ratio (SNR);
Reference Signal Received Power (RSRP);
Channel Quality Indicator (CQI).

In some embodiments, the channel information comprises information used to indicate at least one of the following corresponding to a channel:
delay spread;
angle spread;
average delay;
Doppler;
Doppler spread;
Mean Square Error (MSE);
Normalized Mean Square Error (NMSE);
channel statistics;
distribution information of the channel.

In some embodiments, the error information comprises at least one of the following:
error information of the CSI;
error information of a channel or a channel estimation value corresponding to the CSI;
error information of a precoding matrix corresponding to the CSI.

In some embodiments, the error information comprises at least one of the following:
distance error;
MSE, NMSE, or Minimum Mean Square Error (MMSE);
error information of the CQI;
error information of channel statistics.

In some embodiments, the CSI feedback information comprises CSI feedback information corresponding to the CSI.

Embodiments of this disclosure further provide an information processing apparatus, comprising a memory, a transceiver, and a processor; wherein,
the memory is configured to store a computer program; the transceiver is configured to send and receive data under control of the processor; the processor is configured to read the computer program in the memory and perform the following operations:
determining first information corresponding to Channel State Information (CSI), wherein the first information is used to indicate one or more of quality of the CSI, quality of a channel or a channel estimation value corresponding to the CSI, and quality of a precoding matrix corresponding to the CSI;
determining whether to send CSI feedback information to a second device and/or determining the CSI feedback information to be sent to the second device based on the first information.

In some embodiments, the processor further performs the following operations:
receiving a first reference signal;
determining the CSI based on the first reference signal.

In some embodiments, the processor further performs the following operations:
determining the first information corresponding to the CSI based on configuration information of the first reference signal and/or a second reference signal.

In some embodiments, the processor further performs the following operations:
in a case where the first information meets a first condition, not sending the CSI feedback information to the second device or determining that the CSI feedback information to be sent to the second device does not include the CSI;
in a case where the first information meets a second condition, determining to send the CSI feedback information to the second device or determining that the CSI feedback information to be sent to the second device includes the CSI.

Embodiments of this disclosure further provide an information processing apparatus, comprising a memory, a transceiver, and a processor; wherein,
the memory is configured to store a computer program; the transceiver is configured to send and receive data under control of the processor; the processor is configured to read the computer program in the memory and perform the following operations:
determining CSI feedback information and/or whether the CSI feedback information exists based on configuration information of a first reference signal, a CSI feedback configuration corresponding to the first reference signal and/or first information;
wherein the first information is used to indicate one or more of quality of CSI, quality of a channel or a channel estimation value corresponding to the CSI, and quality of a precoding matrix corresponding to the CSI.

In some embodiments, the CSI feedback information comprises at least one of the following:
a codebook parameter;
a codebook;
a payload size.

In some embodiments, the processor further performs the following operations:
in a case where the first information meets a first condition, determining that no CSI feedback information exists or determining that the CSI feedback information does not include the CSI corresponding to the first information;
in a case where the first information meets a second condition, determining that the CSI feedback information exists or determining that the CSI feedback information includes the CSI corresponding to the first information.

Embodiments of this disclosure further provide an information processing apparatus, comprising:
a first determining unit, configured to determine first information corresponding to Channel State Information (CSI), wherein the first information is used to indicate one or more of quality of the CSI, quality of a channel or a channel estimation value corresponding to the CSI, and quality of a precoding matrix corresponding to the CSI;
a second determining unit, configured to determine whether to send CSI feedback information to a second device and/or determine the CSI feedback information to be sent to the second device based on the first information.

Embodiments of this disclosure further provide an information processing apparatus, comprising:
a third determining unit, configured to determine CSI feedback information and/or whether the CSI feedback information exists based on configuration information of a first reference signal, a CSI feedback configuration corresponding to the first reference signal and/or first information;
wherein the first information is used to indicate one or more of quality of CSI, quality of a channel or a channel estimation value corresponding to the CSI, and quality of a precoding matrix corresponding to the CSI.

Embodiments of this disclosure further provide a processor-readable storage medium, where the processor-readable storage medium stores a computer program, and the computer program is used to enable a processor to perform the steps of the information processing methods as described above.

The above technical solutions of this disclosure have at least the following beneficial effects:
In the embodiments of this disclosure, a first device determines first information corresponding to Channel State Information (CSI), where the first information is used to indicate one or more of quality of the CSI, quality of a channel or a channel estimation value corresponding to the CSI, and quality of a precoding matrix corresponding to the CSI; and determines whether to send CSI feedback information to a second device and/or determines the CSI feedback information to be sent to the second device based on the first information. Thus, through the above solution, the first device can feed back high-quality CSI feedback information to the second device based on the first information or report the CSI feedback information only when the quality of the CSI is high, thereby effectively avoiding the problem of resource waste caused by transmitting low-quality CSI, and effectively ensuring the quality of the reported CSI feedback information.

### BRIEF DESCRIPTION OF THE DRAWINGS

FIG. 1a is a first structural diagram of a network system to which the embodiments of this disclosure are applicable;
FIG. 1b is a second structural diagram of a network system to which the embodiments of this disclosure are applicable;
FIG. 2 is a first schematic flowchart of an information processing method according to an embodiment of this disclosure;
FIG. 3 is a first schematic diagram of information transmission according to an embodiment of this disclosure;
FIG. 4 is a second schematic diagram of information transmission according to an embodiment of this disclosure;
FIG. 5 is a second schematic flowchart of an information processing method according to an embodiment of this disclosure;
FIG. 6 is a first structural block diagram of an information processing apparatus according to an embodiment of this disclosure;
FIG. 7 is a second structural block diagram of an information processing apparatus according to an embodiment of this disclosure;
FIG. 8 is a first module schematic diagram of an information processing apparatus according to an embodiment of this disclosure;
FIG. 9 is a second module schematic diagram of an information processing apparatus according to an embodiment of this disclosure.

### DETAILED DESCRIPTION

The technical solutions in the embodiments of this disclosure will be clearly and completely described below with reference to the accompanying drawings in the embodiments of this disclosure. Obviously, the described embodiments are some rather than all of the embodiments of this disclosure. All other embodiments obtained by a person of ordinary skill in the art based on the embodiments of this disclosure without creative efforts shall fall within the protection scope of this disclosure.

The terms "first", "second" and the like in the specification and claims of this disclosure are used to distinguish similar objects, and are not necessarily used to describe a specific order or sequence. It should be understood that the terms used in this way can be interchanged under appropriate circumstances so that the embodiments of this disclosure described herein can be implemented in an order other than those illustrated or described herein. In addition, the terms "include" and "have" and any variations thereof are intended to cover non-exclusive inclusion. For example, a process, method, system, product, or device that includes a series of steps or units is not necessarily limited to the clearly listed steps or units, but may include other steps or units that are not clearly listed or are inherent to such process, method, product, or device.

The term "and/or" in the embodiments of this disclosure describes an association relationship between associated objects, indicating that three relationships may exist. For example, A and/or B may indicate three situations: A exists alone, A and B exist at the same time, and B exists alone. The character "/" generally indicates that the associated objects before and after are in an "or" relationship. The term "plurality" in the embodiments of this disclosure refers to two or more, and the same applies to other quantifiers.

In the embodiments of this disclosure, the words "exemplary" or "for example" are used to serve as an example, illustration or explanation. Any embodiment or design solution described as "exemplary" or "for example" in the embodiments of this disclosure shall not be construed as being more preferred or having more advantages than other embodiments or design solutions. Specifically, the use of the words "exemplary" or "for example" is intended to present relevant concepts in a specific manner.

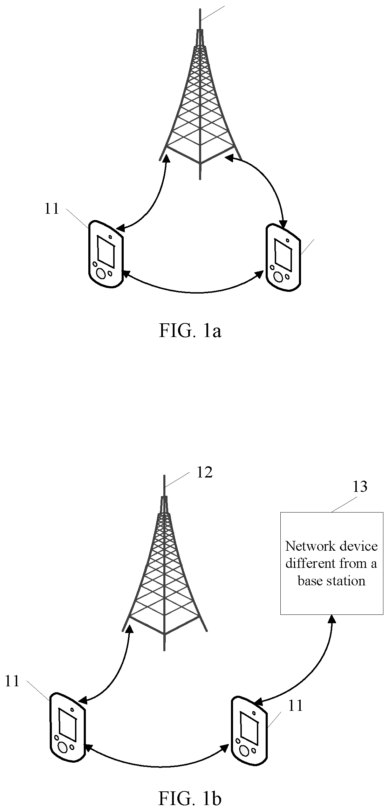

FIG. 1a and FIG. 1b show block diagrams of a wireless communication system to which the embodiments of this disclosure are applicable. The wireless communication system includes a terminal-side device and a network-side device (or a network device). The terminal-side device 11 may also include a terminal or a User Equipment (UE), and may also include a server (UE server) serving the UE. The UE server may undertake functions such as data collection, model training, and model monitoring. The network-side device may include a base station 12 and/or a network device 13 different from the base station, where the network device 13 different from the base station is a network server (NW server), a third-party server, a core network device and/or a management entity, etc. The above-mentioned network server may be a server serving the base station, and the above-mentioned third-party server may be a server different from the above-mentioned network server and the UE server. For example, the third-party server may be a server provided by a chip manufacturer, a terminal manufacturer, an operator or other service providers. The above-mentioned network server or third-party server may be a server used to provide functions such as data collection, model training, and model monitoring. The above-mentioned management entity may provide functions such as data collection, model training, and model monitoring.

To enable a person skilled in the art to better understand the embodiments of this disclosure, the following description is first provided.

In a wireless communication system, a UE measures CSI based on a downlink reference signal (such as a Channel State Information Reference Signal (CSI-RS)) sent by a base station, and sends the measured Channel State Information (CSI) to the base station. The process in which the UE sends CSI to the base station is also referred to as CSI reporting or CSI feedback.

The CSI sent by the UE to the base station may include multiple pieces of information. For example, in an NR system, the CSI may include one or more of the following information:
Channel Quality Indicator (CQI);
Precoding Matrix Indicator (PMI);
CSI-RS Resource Indicator (CRI);
SS/PBCH Block Resource Indicator (SSBRI);
Layer Indicator (LI);
Rank Indicator (RI);
Layer 1 Reference Signal Received Power (L1-RSRP);
Layer 1 Signal to Interference Plus Noise Ratio (L1-SINR);
Capability Set Index.

The base station receives the CSI fed back by the UE. Based on the CSI fed back by the UE, the base station may perform beam selection, determine scheduling information (for example, a Modulation and Coding Scheme (MCS) level for downlink transmission, precoding matrix information PMI, number of transmission layers RI), and the like.

Artificial Intelligence (AI)/Machine Learning (ML) technology has strong optimization and fitting capabilities, and can obtain better channel compression and reconstruction performance by fully learning channel structure knowledge through a neural network. Therefore, AI/ML technology is used to enhance CSI feedback and acquisition. For example, it is used for CSI compression, CSI prediction, and the like.

In an example of large-scale Multiple In Multiple Out (MIMO) CSI feedback based on AI/ML, implementation is performed based on an encoder and a decoder. The encoder is applied on the UE side for CSI compression, which compresses an original N-dimensional channel matrix H into an M-dimensional codeword s by using the sparse characteristic of the channel matrix, and its principle can be expressed as:
$s = {f}_{en} \left(H\right) ;$

The decoder is applied on the network side for CSI reconstruction, that is, restoring the received codeword s to the original channel matrix Ĥ, and its principle can be expressed as:
$\hat{H} = {f}_{de} \left(s\right) .$

When applied in an actual communication system, its basic working mechanism is:
After estimating a space-frequency domain channel matrix H, a user side uses an encoder to generate a compressed codeword s from the original channel or input CSI obtained from the original channel after preprocessing, and then feeds back the compressed codeword s to the base station;
After receiving the compressed codeword s, the base station uses a decoder to reconstruct/restore the original channel/input CSI.

The above is the basic principle of AI/ML-based space-frequency domain CSI compression feedback. That is, the AI/ML-based space-frequency domain CSI compression feedback is a bilateral model deployed on both sides.

UE side: Compressing the original channel or the preprocessed channel by using an AI/ML generation part (also referred to as a CSI generation part, an AI/ML encoder, etc.), quantizing the compressed channel into binary bits and feeding them back to the base station;
Network side: Dequantizing the binary bits fed back by the UE side, and then restoring channel information by using an AI/ML reconstruction part (also referred to as a CSI reconstruction part, an AI/ML decoder). In some embodiments, the network side also performs some post-processing operations.

In another AI-based CSI feedback mode, for UE-side time-domain CSI prediction, the UE collects CSI information of multiple historical moments, predicts CSI information of a future moment by using an AI/ML model and feeds it back to the base station. The predicted CSI information may be fed back by using a traditional CSI feedback mode, for example, a codebook-based CSI feedback mode.

For base station-side time-domain CSI prediction, the base station receives CSI feedback information of multiple historical moments fed back by the terminal, and predicts CSI of a future moment by using an AI/ML model. The CSI feedback information of historical moments may be fed back by using a traditional feedback mode, for example, a codebook-based CSI feedback mode.

When performing AI/ML-based CSI compression/feedback/acquisition, to perform performance monitoring (for example, performance monitoring of an AI/ML model or performance monitoring of an AI/ML-based function) or perform model training or model update, the UE needs to feed back high-precision CSI to the base station or a certain device, so that the base station or the device can use the high-precision CSI for performance monitoring, model training or model update. The certain device may be a management entity and the like.

Such high-precision CSI used for performance monitoring/model training/model update usually has a higher feedback precision than CSI used for scheduling, or is CSI obtained by using a non-AI method. For example, it is CSI obtained by using a codebook-based method, or quantization of a channel matrix, or a precoding matrix for quantization of eigenvectors, etc.

Such high-precision CSI used for performance monitoring/model training/model update is also referred to as ground-truth CSI.

A ground-truth CSI may be referred to as a sample, a data point, or a piece of data.

For the purpose of implementing AI/ML model training, data analysis or reasoning, the process in which a device such as a base station collects data may be referred to as data collection.

The information processing method provided by the embodiments of this disclosure will be described in detail below with reference to the accompanying drawings through some embodiments and their application scenarios.

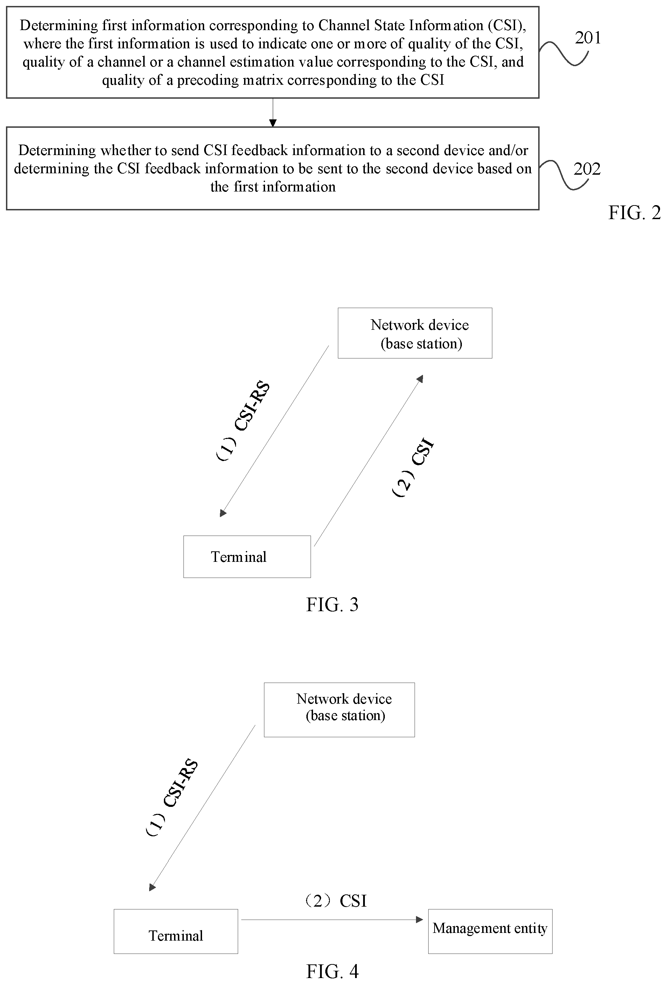

As shown in FIG. 2, an embodiment of this disclosure provides an information processing method, performed by a first device, the method including:
Step 201: Determining first information corresponding to Channel State Information (CSI), where the first information is used to indicate one or more of quality of the CSI, quality of a channel or a channel estimation value corresponding to the CSI, and quality of a precoding matrix corresponding to the CSI.

The first device in the embodiment of this disclosure is a terminal.

In the embodiment of this disclosure, the above-mentioned first information may also be described as quality information.

In some embodiments, the above-mentioned CSI is ground-truth CSI. The ground-truth CSI is CSI used for one or more of performance monitoring, model training, and model update. In some embodiments, the performance monitoring includes one or more of model monitoring and functionality monitoring.

Certainly, the above-mentioned CSI may also be CSI under a certain CSI-RS configuration, or CSI under a certain feedback configuration, or a certain type of CSI, which is not specifically limited herein.

Step 202: Determining whether to send CSI feedback information to a second device and/or determining the CSI feedback information to be sent to the second device based on the first information.

In some embodiments, the CSI feedback information includes CSI feedback information corresponding to the CSI. In some embodiments, the second device may be a base station or a management entity different from the base station, such as a server.

In some embodiments, the CSI feedback information includes channel information.

In some embodiments, the CSI feedback information includes one or more of the following:
Channel Quality Indicator (CQI);
Precoding Matrix Indicator (PMI);
CSI-RS Resource Indicator (CRI);
SS/PBCH Block Resource Indicator (SSBRI);
Layer Indicator (LI);
Rank Indicator (RI);
Layer 1 Reference Signal Received Power (L1-RSRP);
Layer 1 Signal to Interference Plus Noise Ratio (L1-SINR);
Capability Set Index;
Codebook parameter indication information;
Codebook indication information;
Payload size indication information;
Quantization information of a channel.

In some embodiments, the PMI is precoding matrix indication information determined based on a codebook; in some embodiments, the PMI is quantization information of eigenvectors obtained by performing SVD decomposition on a channel (or a channel estimation value).

In some embodiments, the quantization information of the channel is information obtained by quantizing a channel matrix. In some embodiments, the quantization is scalar quantization (for example, uniform quantization or non-uniform quantization). In some embodiments, the quantization is vector quantization.

In some embodiments, the CSI feedback information includes CSI feedback information corresponding to the CSI.

In the embodiments of this disclosure, a first device determines first information corresponding to Channel State Information (CSI), where the first information is used to indicate one or more of quality of the CSI, quality of a channel or a channel estimation value corresponding to the CSI, and quality of a precoding matrix corresponding to the CSI; and determines whether to send CSI feedback information to a second device and/or determines the CSI feedback information to be sent to the second device based on the first information. Thus, through the above solution, the first device can feed back high-quality CSI feedback information to the second device based on the first information or report the CSI feedback information only when the quality of the CSI is high, thereby effectively avoiding the problem of resource waste caused by transmitting low-quality CSI, and effectively ensuring the quality of the reported CSI feedback information.

In some embodiments, the method of the embodiments of this disclosure further includes:
Receiving a first reference signal;
Determining the CSI based on the first reference signal. That is, the CSI in Step 201 is CSI determined based on the first reference signal.

The method for the first device to determine the CSI may include at least one of the following: a model-based CSI determination method; a codebook-based CSI determination method.

In some embodiments, the first reference signal is a CSI-RS.

In some embodiments, the CSI feedback information is CSI feedback information corresponding to the first reference signal.

In some embodiments, the second device is a base station. As shown in FIG. 3, the first device receives a first reference signal sent by a network device (base station), determines CSI based on the first reference signal, and feeds back the CSI to the base station when it is determined to send CSI feedback information based on the first information corresponding to the CSI.

In some embodiments, the second device is a management entity. As shown in FIG. 4, the first device receives a first reference signal sent by a network device (base station), determines CSI based on the first reference signal, and feeds back the CSI to the management entity when it is determined to send CSI feedback information based on the first information corresponding to the CSI.

It can be seen that the network device is responsible for data collection in FIG. 3, and the management entity is responsible for data collection in FIG. 4. Although only one terminal is illustrated in FIG. 3 and FIG. 4, one network device or management entity may also collect data of multiple terminals. That is, there are multiple terminals in the network, and the multiple terminals send CSI to the network device or the management entity. Certainly, there may also be multiple base stations and/or multiple management entities in the network. In a case where there are both base stations and management entities in the network, it is also possible that both the base stations and the management entities collect CSI; in a case where there are multiple base stations in the network, it is possible that some base stations collect CSI and other base stations do not collect CSI.

In some embodiments, the determining first information corresponding to Channel State Information (CSI) includes:
Determining the first information corresponding to the CSI based on configuration information of the first reference signal and/or a second reference signal.

It should be noted that the above-mentioned first reference signal is the same as or different from the second reference signal. For example, the above-mentioned first reference signal is a CSI-RS, and the above-mentioned second reference signal is a positioning reference signal. For another example, the above-mentioned first reference signal is a CSI-RS used to determine the CSI, and the second reference signal is some other CSI-RSs used to determine the first information. For another example, the above-mentioned first reference signal is a CSI-RS used to determine the CSI, and the second reference signal includes the first reference signal and some other CSI-RSs used to determine the first information. An example of other CSI-RSs used to determine the first information is a CSI-RS within a given time window, or a CSI-RS within a given time window that has at least the same certain configurations as the first reference signal. Examples of the certain configurations include: number of antenna ports, resource density and/or spatial correlation information, etc.

In some embodiments, the configuration information of the first reference signal includes configuration information of a resource of the first reference signal and/or configuration information of a resource set of the first reference signal.

Some examples of the configuration information of the resource of the first reference signal and/or the configuration information of the resource set of the first reference signal include one or more of the following information about the resource of the first reference signal and/or the resource set of the first reference signal:
Number of antenna ports;
Time-domain density;
Frequency-domain density;
Period;
Power information;
Pattern.

In some embodiments, the pattern is a transmission pattern of a resource in a slot and/or a PRB.

As an implementation manner, the determining the first information corresponding to the CSI based on the configuration information of the first reference signal and/or a second reference signal includes: determining the first information corresponding to the CSI based on a corresponding relationship between the configuration information of the first reference signal and/or the second reference signal and the first information, where the corresponding relationship may be agreed by a protocol, or configured by the second device, or configured by the base station, or determined by the UE. For example, the first information corresponding to the CSI is a function of the configuration information of the first reference signal. The first device determines the first information based on the configuration information of the first reference signal. For example, taking the configuration information of the first reference signal as the pattern of the first reference signal, the first device obtains the CSI based on the first reference signal, and in a case where the CSI corresponds to the same value, the first information corresponds to different values when the pattern of the first reference signal is a first pattern and a second pattern. Taking the configuration information of the first reference signal as the pattern and time-domain density of the first reference signal, the first device obtains the CSI based on the first reference signal, and in a case where the CSI corresponds to the same value, the first information corresponds to different values when the pattern and density of the first reference signal are a first combination and a second combination. For another example, the first information corresponding to the CSI is a function of a measurement value corresponding to the second signal. The first device determines the first information based on a measurement quantity of the second signal. The measurement quantity of the second reference signal is a measurement quantity obtained based on measuring the second reference signal. In some embodiments, the measurement quantity includes: a measurement quantity of a channel (such as RSRP, SINR and/or distribution of a channel, etc.), positioning information and/or information used to characterize positioning accuracy, etc. For example, the first device determines the first information based on the measurement quantity of the second reference signal, and in a case where one or more of the CSI, the quality corresponding to the CSI, the quality of the channel or channel estimation value corresponding to the CSI, and the quality of the precoding matrix corresponding to the CSI correspond to the same value, the first information respectively corresponds to different values when the measurement quantity of the second reference signal is a first value and a second value (taking the first information as quality level information as an example, the first information corresponds to a first quality level when the measurement quantity of the second reference signal is the first value, and the first information corresponds to a second quality level when the measurement quantity of the second reference signal is the second value). For another example, when the number of antenna ports or the time-domain density included in the configuration information of the first reference signal is within a first numerical range, the determining the first information corresponding to the CSI based on the corresponding relationship includes: the quality level corresponding to the CSI is a first quality level. When the number of antenna ports or the time-domain density included in the configuration information of the first reference signal is within a second numerical range, the determining the first information corresponding to the CSI based on the corresponding relationship includes: the quality level corresponding to the CSI is a second quality level. In some embodiments, the configuration information of the first reference signal includes configuration information of a signal resource corresponding to the first reference signal. Taking the first reference signal as a CSI-RS as an example, the configuration information of the signal resource corresponding to the first signal is the configuration information of the CSI-RS resource corresponding to the CSI-RS. In some embodiments, the configuration information of the first reference signal includes configuration information of a signal resource set corresponding to the first reference signal. Taking the first reference signal as a CSI-RS as an example, the configuration information of the signal resource set corresponding to the first signal is the configuration information of the CSI-RS resource set corresponding to the CSI-RS.

In some embodiments, the determining whether to send CSI feedback information to a second device and/or determining the CSI feedback information to be sent to the second device based on the first information includes:
In a case where the first information meets a first condition, not sending the CSI feedback information to the second device (that is, the content of the CSI feedback information is empty) or determining that the CSI feedback information to be sent to the second device does not include the CSI (or the CSI corresponding to the first reference signal is empty);
In a case where the first information meets a second condition, determining to send the CSI feedback information to the second device or determining that the CSI feedback information to be sent to the second device includes the CSI.

In some embodiments, the CSI feedback information includes first indication information, where the first indication information is used to indicate whether the CSI feedback information includes the CSI, or the first indication information is used to indicate information about whether the CSI is empty.

In some embodiments, the first information meeting the second condition includes: the first information does not meet the first condition.

In some embodiments, the first condition includes:
A relative relationship between the first information and a first threshold or first reference quality information meets a first relationship;
The second condition includes:
   A relative relationship between the first information and a second threshold or second reference quality information meets a second relationship.
   For example, the above-mentioned first relationship may be greater than, less than, greater than or equal to, or less than or equal to;
   The above-mentioned second relationship may be greater than, less than, greater than or equal to, or less than or equal to;

In some embodiments, the above-mentioned first relationship and the second relationship are different relationships.

In some embodiments, the above-mentioned first relationship and the second relationship are complementary relationships. For example, the first relationship includes being less than or equal to a threshold or reference quality information, and the second relationship includes being greater than the threshold or reference quality information.

In some embodiments, the above-mentioned first threshold is pre-agreed by the second device and the first device (for example, sent by the second device to the first device, or sent by the first device to the second device, or agreed by a protocol) or independently determined by the first device.

In some embodiments, the above-mentioned second threshold is pre-agreed by the second device and the first device (for example, sent by the second device to the first device, or sent by the first device to the second device, or agreed by a protocol) or independently determined by the first device.

In some embodiments, the above-mentioned first threshold and the second threshold are the same threshold, that is, the value of the first threshold is equal to the value of the second threshold.

In some embodiments, the first reference quality information and the second reference quality information are the same quality information. In some embodiments, the value of the first reference quality information is the same as the value of the second reference quality information.

In some embodiments, the determining whether to send CSI feedback information to a second device and/or determining the CSI feedback information to be sent to the second device based on the first information includes:
Determining whether to send the CSI feedback information to the second device and/or determining the CSI feedback information to be sent to the second device based on the first information and a first parameter.

In some embodiments, the first parameter includes at least one of the following:
Configuration information of the first reference signal, where the first reference signal is a reference signal used to determine the CSI. In some embodiments, the configuration information of the first reference signal includes information used to configure one or more of the following: the number of antenna ports of the first reference signal; the time-domain density of the first reference signal; the frequency-domain density of the first reference signal; the pattern of the first reference signal. In some embodiments, the configuration information of the first reference signal is configuration information sent by the second device. In some embodiments, the configuration information of the first reference signal includes configuration information of a signal resource corresponding to the first reference signal. Then, the configuration information of the first reference signal includes information used to configure one or more of the following: the number of antenna ports of the signal resource corresponding to the first reference signal; the time-domain density of the signal resource corresponding to the first reference signal; the frequency-domain density of the signal resource corresponding to the first reference signal; the pattern of the signal resource corresponding to the first reference signal. Taking the first reference signal as a CSI-RS as an example, the configuration information of the signal resource corresponding to the first signal includes the configuration information of the CSI-RS resource corresponding to the CSI-RS. In some embodiments, the configuration information of the first reference signal includes configuration information of a signal resource set corresponding to the first reference signal. Then, the configuration information of the first reference signal includes information used to configure one or more of the following corresponding to the signal resource set corresponding to the first reference signal: number of antenna ports; time-domain density; frequency-domain density; pattern. Taking the first reference signal as a CSI-RS as an example, the configuration information of the signal resource set corresponding to the first signal is the configuration information of the CSI-RS resource set corresponding to the CSI-RS.

Position information of the first device; in some embodiments, the position information includes absolute position or relative position of the first device;
Speed information of the first device, where the speed information is information used to indicate the speed of the first device. In some embodiments, the speed information is an index information or identification information, and the speed of the first device can be determined by looking up a table or a corresponding relationship based on the speed information of the first device. In some embodiments, the speed information may be information related to Doppler, and/or information related to time domain, etc.

In the embodiment of this disclosure, the above-mentioned position information is information used to indicate the position of the first device. The second device can determine the position of the first device based on the position information of the first device. For example, the position information of the first device includes one or more of the following:
Reference Signal Time Difference (RSTD);
Reference Signal Received Power (RSRP);
Relative Time Difference (RTD), where the RTD represents a delay difference between multipaths of a measurement cell. For example, if P paths are detected, P-1 RTDs may be reported, and the value of P may be configured by the network side, and the second device may position the first device based on the RTD;
SNR or SINR;
Transmit-receive time difference of the first device;
Time of Arrival (TOA) measurement value;
Positioning Reference Signal (PRS) resource ID or PRS resource set ID;
Angle information;
A time stamp associated with a measurement value of the first device, in some embodiments, the time stamp includes a system frame number and/or a slot number;
Position index.
In the embodiment of this disclosure, the position of the first device can be determined through the above-mentioned position information, and then the above-mentioned first information can be determined based on the position of the first device. For example, the quality corresponding to the CSI is relatively good when the UE is located in a certain area, and relatively poor when the UE is located in another area. For another example, if the UE is located outdoors and within a certain range from the base station, the performance of CSI measurement is relatively good. If the UE is located indoors or at the cell edge, the measurement of the UE for CSI may be inaccurate due to large loss or large interference, resulting in poor quality corresponding to the CSI.

In addition, the first information of the CSI can also be indicated based on the above-mentioned speed information in the embodiment of this disclosure. For example, the lower the speed of the first device, the better the quality corresponding to the CSI can be considered.

In the embodiment of this disclosure, the same channel quality information or channel information may correspond to the same or different quality levels in different speed ranges and/or different position ranges.

In some embodiments, the determining the CSI feedback information to be sent to the second device based on the first information includes:
Determining at least one of a codebook parameter, a codebook, or a payload size in the CSI feedback information based on the first information.

In some embodiments, the codebook parameter, the codebook and/or the payload size are a codebook parameter, a codebook and/or a payload size corresponding to the CSI.

In some embodiments, the codebook parameter, the codebook and/or the payload size are a codebook parameter, a codebook and/or a payload size corresponding to the CSI (the CSI in Step 201).

In some embodiments, the CSI is CSI determined based on a codebook. The codebook parameter is a parameter used to indicate and/or determine a codebook. In some embodiments, the codebook is a DFT-based codebook. In some embodiments, the codebook is a codebook based on one or more of a spatial domain basis vector, a frequency domain basis vector, and a Doppler domain basis vector. In some embodiments, the codebook includes a vector quantization codebook. In some embodiments, the first device performs vector quantization on information indicated by the CSI (for example, the precoding matrix indicated by the CSI) to obtain CSI feedback information. In some embodiments, the codebook includes a scalar quantization codebook. In some embodiments, the first device performs scalar quantization on information indicated by the CSI (for example, the precoding matrix indicated by the CSI) to obtain CSI feedback information. In some embodiments, the codebook parameter includes a quantization bit number (for example, a quantization bit number used to quantize a coding matrix or channel information). In some embodiments, the codebook parameter includes a parameter used to indicate at least one of a spatial domain basis vector, a frequency domain basis vector, or a Doppler domain basis vector. In some embodiments, the codebook parameter includes a parameter used to indicate the number of precoding matrix coefficients.

In some embodiments, at least one of a codebook parameter, a codebook, or a payload size corresponding to the CSI in the CSI feedback information is determined based on the first information. As an example, when the CSI is determined based on a first reference signal, the determining at least one of a codebook parameter, a codebook, or a payload size corresponding to the CSI in the CSI feedback information based on the first information includes: determining at least one of a codebook parameter, a codebook, or a payload size corresponding to the first reference signal in the CSI feedback information based on the first information. In some embodiments, the codebook parameter, the codebook and the payload size are a function of the first information. For example, the first information whose value is within a first range and the first information whose value is within a second range respectively correspond to different codebook parameters, codebooks and payload sizes.

In some embodiments, the determining the CSI feedback information to be sent to the second device based on the first information and a first parameter includes:
Determining at least one of a codebook parameter, a codebook, or a payload size in the CSI feedback information based on the first information and the first parameter. In some embodiments, the codebook parameter, the codebook and/or the payload size are a codebook parameter, a codebook and/or a payload size corresponding to the CSI.

In some embodiments, the codebook parameter, the codebook and/or the payload size are a codebook parameter, a codebook and/or a payload size corresponding to the CSI (the CSI in Step 201).

In some embodiments, the CSI in the CSI feedback information includes the CSI in Step 201 and some other CSIs. An example of other CSIs is CSI measured within a given time window, where the given time window may be predefined, or agreed by the first device and the second device, or agreed by the first device and the base station, etc.

In some embodiments, there are two or more value ranges, and different value ranges correspond to different codebook parameters, codebooks and/or payloads. The corresponding codebook parameter, codebook and/or payload are determined based on the value range to which the first information belongs.

In some embodiments, the value range is determined based on a threshold, where the threshold is pre-agreed by the second device and the first device (for example, sent by the second device to the first device, or sent by the first device to the second device, or agreed by a protocol) or independently determined by the first device.

In some embodiments, the CSI feedback information includes second indication information, where the second indication information is used to indicate at least one of a codebook parameter, a codebook, or a payload size.

In some embodiments, the method of the embodiments of this disclosure further includes:
Sending the first information.

Here, the first information is sent so that the second device can determine the CSI feedback information and/or whether the CSI feedback information exists based on the first information.

In some embodiments, the first information includes at least one of the following:
Channel quality information;
Channel information;
Quality level information;
Error information.

In some embodiments, the channel quality information includes at least one of the following:
A1: Signal-to-Interference-Noise Ratio (SINR) or Signal-to-Noise Ratio (SNR);
A2: Reference Signal Received Power (RSRP);
A3: Channel Quality Indicator (CQI).

For the above-mentioned item A1, it may specifically include at least one of the following:
L1-SINR/ L1-SNR;
L3-SINR/ L3-SNR.

In some embodiments, the SINR/ SNR is an SINR/ SNR determined based on a channel estimation value, so that the quality of the channel estimation value can be determined based on the SINR/ SNR.

In some embodiments, the L1-SINR includes a linear average of Signal-to-Interference-Noise Ratios of Resource Elements (REs) carrying reference signals. In some embodiments, the reference signals include the first reference signal and/or the second reference signal. In some embodiments, the L1-SNR includes a linear average of Signal-to-Noise Ratios of Resource Elements (REs) carrying reference signals. In some embodiments, the reference signals include the first reference signal and/or the second reference signal.

In some embodiments, the L3-SINR/ L3-SNR includes a higher layer filtered L3-SINR/ L3-SNR. It may be a higher layer filtered SINR/ higher layer filtered SNR determined by performing higher layer filtering on at least one L1-SINR/ L1-SNR. The higher layer filtered SINR/ higher layer filtered SNR may also be described as a higher layer SINR/ higher layer SNR or a filtered SINR/ filtered SNR. For example, if the reference signal is a periodic CSI-RS, the terminal device may determine the higher layer filtered SINR/ higher layer filtered SNR based on CSI-RS transmissions of multiple periods.

A manner of calculating the higher layer filtered SINR/ higher layer filtered SNR may be adopting an L3 filtering manner. The L3 filtering manner is as follows (the L1-SINR/ L1-SNR is the measurement quantity *M*ₙ in the following formula):
${F}_{n} = \left(1-a\right) * {F}_{n - 1} + a * {M}_{n} ;$
where *M*ₙ is the latest measurement result received from the physical layer, and n is an integer greater than or equal to 1; *F*ₙ is an updated filtered measurement result (such as the higher layer filtered SINR/ higher layer filtered SNR in this disclosure); *F*ₙ₋₁ is a previous filtered measurement result, where *F*₀ is set to *M*₁ (that is, the first measurement result received from the physical layer); for a *MeasObjectNR* (NR measurement object), *a* = 1/2^{(***ki***/4)}, where *kᵢ* is a filtering coefficient of a corresponding measurement quantity of the *i*-th *QuantityConfigNR* (NR measurement quantity configuration) in a *quantityConfigNR-List* (NR measurement quantity configuration list), and *i* is indicated by a *quantityConfigIndex* (measurement quantity configuration index) in the *MeasObjectNR*; for other measurements, *a* = 1/2^{(*k*/4)}, where *k* is a filtering coefficient of a corresponding measurement quantity received by a *quantityConfig* (measurement quantity configuration); for a Universal Terrestrial Radio Access-Frequency Division Duplex (UTRA-FDD) system, *a* = 1/2^{(*k*/4)}, where *k* is a filtering coefficient of a corresponding measurement quantity received by a *quantityConfigUTRA-FDD* (UTRA-FDD measurement quantity configuration) in the *QuantityConfig* (measurement quantity configuration).

In some embodiments, the SINR/ SNR is an SINR/SNR determined based on a precoding matrix or a channel matrix corresponding to the first CSI, so that the quality of the channel or precoding matrix corresponding to the CSI can be determined based on the SINR/ SNR.

For the above-mentioned item A2, it may specifically include at least one of the following:
L1-RSRP;
L3-RSRP.

In some embodiments, the RSRP is an RSRP determined based on a channel estimation value, so that the quality of the channel estimation value can be determined based on the RSRP.

In some embodiments, the RSRP is an RSRP determined based on the CSI, for example, an RSRP determined by using the first CSI as a precoding matrix, so that the quality of the CSI can be determined based on the RSRP.

In some embodiments, the L3-RSRP includes a higher layer filtered L3-RSRP. It may be a higher layer filtered L3-RSRP determined by performing higher layer filtering on at least one L3-RSRP. The higher layer filtered L3-RSRP may also be described as a higher layer L3-RSRP or a filtered L3-RSRP. For example, if the reference signal is a periodic CSI-RS, the terminal device may determine the higher layer filtered L3-RSRP based on CSI-RS transmissions of multiple periods.

A manner of calculating the higher layer filtered L3-RSRP may be adopting an L3 filtering manner. The L3 filtering manner is as follows (the L1-RSRP is the measurement quantity *M*ₙ in the following formula):
${F}_{n} = \left(1-a\right) * {F}_{n - 1} + a * {M}_{n} ;$
where *M*ₙ is the latest measurement result received from the physical layer, and n is an integer greater than or equal to 1; *F*ₙ is an updated filtered measurement result (such as the higher layer filtered RSRP in this disclosure); *F*ₙ₋₁ is a previous filtered measurement result, where *F*₀ is set to *M*₁ (that is, the first measurement result received from the physical layer); for a *MeasObjectNR* (NR measurement object), *a* = 1/2^{(***ki***/4)}, where *kᵢ* is a filtering coefficient of a corresponding measurement quantity of the *i*-th *QuantityConfigNR* (NR measurement quantity configuration) in a *quantityConfigNR-List* (NR measurement quantity configuration list), and *i* is indicated by a *quantityConfigIndex* (measurement quantity configuration index) in the *MeasObjectNR*; for other measurements, *a* = 1/2^{(*k*/4)}, where *k* is a filtering coefficient of a corresponding measurement quantity received by a *quantityConfig* (measurement quantity configuration); for a Universal Terrestrial Radio Access-Frequency Division Duplex (UTRA-FDD) system, *a* = 1/2^{(*k*/4)}, where *k* is a filtering coefficient of a corresponding measurement quantity received by a *quantityConfigUTRA-FDD* (UTRA-FDD measurement quantity configuration) in the *QuantityConfig* (measurement quantity configuration).

For the above-mentioned item A3, the above-mentioned CQI may be a CQI determined based on the CSI, so that the quality of the CSI can be determined based on the CQI.

In some embodiments, the channel information includes information used to indicate at least one of the following corresponding to a channel:
Delay spread; in some embodiments, the delay spread of the channel corresponding to the CSI;
Angle spread; in some embodiments, the angle spread of the channel corresponding to the CSI;
Average delay; in some embodiments, the average delay of the channel corresponding to the CSI;
Doppler; in some embodiments, the Doppler of the channel corresponding to the CSI;
Doppler spread; in some embodiments, the Doppler spread of the channel corresponding to the CSI;
Mean Square Error (MSE); in some embodiments, the MSE of the channel corresponding to the CSI, for example, the MSE between the measured value and the reported value of each Resource Element (RE);
Normalized Mean Square Error (NMSE); in some embodiments, the NMSE of the channel corresponding to the CSI, for example, the NMSE between the measured value and the reported value of each RE;
Channel statistics, which include statistics obtained by counting channels based on multiple moments or multiple reference signals. In some embodiments, the multiple moments include transmission moments of multiple first reference signals, and the statistics include one or more of delay spread, angle spread, average delay, Doppler, and Doppler spread. The multiple first reference signals may correspond to the same signal resource or different signal resources;
Distribution information of the channel, such as the distribution type, mean value, variance, etc., followed by the channel envelope. For another example, the Probability Density Function (PDF) distribution corresponding to the channel.

In some embodiments, the quality level information includes at least one of the following:
Quality level of the CSI;
Quality level of a channel estimation value corresponding to the CSI;
Quality level of a precoding matrix corresponding to the CSI.

In some embodiments, the first device and the second device pre-agree on a manner of dividing quality levels. For example, the second device indicates a quality level table to the first device, and the first device performs channel estimation by using the first reference signal corresponding to the CSI, and determines the quality level of the channel estimation value corresponding to the CSI based on the quality of the channel estimation value and the quality level table. For another example, the second device indicates a quality level table to the first device, and the first device determines the quality level corresponding to the CSI based on the quality level table. For another example, the second device indicates value ranges corresponding to multiple levels of quality to the first device, and the first device determines the quality level based on the value ranges.

In some embodiments, the error information includes at least one of the following:
Error information of the CSI;
Error information of a channel or a channel estimation value corresponding to the CSI;
Error information of a precoding matrix corresponding to the CSI.

In some embodiments, the above-mentioned error information may also be referred to as deviation information.

In some embodiments, the error information includes at least one of the following:
B1: Distance error;
B2: MSE, NMSE, or Minimum Mean Square Error (MMSE);
B3: Error information of the CQI;
B4: Error information of channel statistics.

For the above-mentioned item B1:
In some embodiments, the distance error includes an error of Euclidean distance;
In some embodiments, the above-mentioned distance error may include a distance between the CSI and a reference CSI, where the reference CSI may be indicated by the base station or determined by the terminal. In some embodiments, the reference CSI is a statistic.

In some embodiments, the above-mentioned distance error is a distance between a channel estimation value corresponding to the CSI and a reference channel, where the reference channel may be indicated by the base station or determined by the terminal. In some embodiments, the reference channel is a statistic;
In some embodiments, the above-mentioned distance error is a distance between a precoding matrix corresponding to the CSI and a reference distance, where the reference matrix may be indicated by the base station or determined by the terminal. In some embodiments, the reference matrix is a statistic.

For the above-mentioned item B2:
In some embodiments, the MSE/NMSE/MMSE is an MSE/NMSE/MMSE corresponding to the CSI;
In some embodiments, the MSE/NMSE/MMSE is an MSE/NMSE/MMSE of a precoding matrix corresponding to the CSI;
In some embodiments, the MSE/NMSE/MMSE is an MSE/NMSE/MMSE of a channel (or a channel estimation value) corresponding to the CSI;
As an implementation manner, the MSE/NMSE/MMSE is an MSE/NMSE/MMSE determined based on channels (or channel estimation values)/CSI at multiple frequency domain positions;
As an implementation manner, the MSE/NMSE/MMSE is an MSE/NMSE/MMSE determined based on channels (or channel estimation values)/CSI at multiple time domain positions;
As an implementation manner, the MSE/NMSE/MMSE is an MSE/NMSE/MMSE determined based on channels (or channel estimation values)/CSI at multiple time domain and frequency domain positions;
In some embodiments, the MSE/NMSE/MMSE is the MSE/NMSE/MMSE between the measured value and the reported value at each time domain and/or frequency domain position. In some embodiments, the measured value and the reported value include but are not limited to: channel estimation value, precoding matrix and/or CSI, etc.

In some embodiments, the MSE/NMSE/MMSE is an MSE/NMSE/MMSE determined by the UE based on the CSI and multiple CSIs before and/or after the CSI;
In some embodiments, the MSE/NMSE/MMSE is an MSE/NMSE/MMSE determined by the UE based on the CSI and multiple channel estimation values before and/or after the CSI;
In some embodiments, the above-mentioned "before and/or after" is determined based on the transmission time of the CSI, or the calculation time of the CSI, or the sending or receiving time of the first reference signal corresponding to the CSI.

For the above-mentioned item B4:
The error information of the channel statistics may be error information of one or more of the following statistics:
Delay spread;
Angle spread;
Average delay;
Doppler;
Doppler spread;
Distribution information of the channel, such as the distribution type, mean value, variance, etc., followed by the channel envelope; for another example, the PDF distribution corresponding to the channel.

In some embodiments, the error information is error information determined based on one or more of a channel estimation value, reference signal information corresponding to the CSI, a UE position, a channel distribution, and the like.

In the embodiments of this disclosure, a first device determines first information corresponding to Channel State Information (CSI), where the first information is used to indicate one or more of quality of the CSI, quality of a channel or a channel estimation value corresponding to the CSI, and quality of a precoding matrix corresponding to the CSI; and determines whether to send CSI feedback information to a second device and/or determines the CSI feedback information to be sent to the second device based on the first information. Thus, through the above solution, the first device can feed back high-quality CSI feedback information to the second device based on the first information or report the CSI feedback information only when the quality of the CSI is high, thereby effectively avoiding the problem of resource waste caused by transmitting low-quality CSI, and effectively ensuring the quality of the reported CSI feedback information.

In some embodiments, the first device determining the CSI feedback information to be sent to the second device based on the first information includes: the first device determining the format, included content, included parameters, and some attributes of the parameters (such as whether related to the first information) of the CSI feedback information based on the first information, and then sending the CSI feedback information to the second device.

In some embodiments, the first device determining the CSI feedback information to be sent to the second device based on the first information includes: the first device determining the CSI feedback information based on at least one of the configuration information of the first reference signal or the CSI feedback configuration corresponding to the first reference signal, and the first information. In some embodiments, the first device determining the CSI feedback information based on at least one of the configuration information of the first reference signal or the CSI feedback configuration corresponding to the first reference signal, and the first information includes: the first device determining the format, included content, included parameters, and some attributes of the parameters (such as whether related to the first information) of the CSI feedback information based on at least one of the configuration information of the first reference signal or the CSI feedback configuration corresponding to the first reference signal, and the first information.

In some embodiments, the first device determines the format, included content, included parameters, and some attributes of the parameters (such as whether related to the first information) of the CSI feedback information based on at least one of the configuration information of the first reference signal or the CSI feedback configuration corresponding to the first reference signal.

The information processing method of this disclosure will be described below with reference to embodiments.

Embodiment 1 (This embodiment is described by taking the first reference signal as a CSI-RS as an example):
(1) The base station sends a CSI-RS to the UE;
(2) The UE determines CSI based on the CSI-RS.

In some embodiments, the manner in which the UE determines the CSI based on the CSI-RS is: the UE performs channel estimation based on the CSI-RS to obtain a channel estimation value H, and the UE obtains the CSI based on H.

In some embodiments, the CSI includes one or more of the following:
Precoding matrix information;
Transmission layer number information;
Channel matrix information.
Some manners in which the UE determines the CSI based on the channel estimation value H include:
   Manner 1: The UE determines one or more of a precoding matrix and a transmission layer number based on H, and determines the CSI based on one or more of the precoding matrix and the transmission layer number. A manner in which the UE determines the precoding matrix based on H is that the UE performs eigenvalue decomposition based on H to obtain eigenvectors, and finds a precoding matrix in a codebook that is closest to the eigenvectors as the precoding matrix used to determine the CSI. Another manner in which the UE determines the precoding matrix based on H is that the UE projects H onto some basis vectors and determines the precoding matrix based on projection values.

Manner 2: The UE quantizes the channel estimation value H to obtain channel matrix information.

In some embodiments, the above-mentioned CSI is ground-truth CSI.

(3) The UE determines first information corresponding to the CSI, where the first information is used to indicate one or more of quality of the CSI, quality of a channel or a channel estimation value corresponding to the CSI, and quality of a precoding matrix corresponding to the CSI.

In some embodiments, the UE determines the first information corresponding to the CSI based on one or more of the configuration information of the CSI-RS sent by the base station and a reference signal. In some embodiments, the reference signal includes a positioning reference signal. In some embodiments, the reference signal is a CSI-RS. In some embodiments, the reference signal includes the CSI-RS (first reference signal) on the UE side in Step 1 and/or other CSI-RSs (second reference signals).

In the embodiment of this disclosure, the first information corresponding to the CSI may be understood as the first information corresponding to the first reference signal.

In some embodiments, the UE determining the first information corresponding to the CSI includes the UE determining the first information corresponding to the CSI based on the first reference signal.

In some embodiments, the UE determining the first information corresponding to the CSI based on the first reference signal includes: the UE determining a channel estimation value (the channel estimation value may be in the form of one or more matrices) based on the first reference signal, and determining the first information corresponding to the CSI based on the channel estimation value.

(4) The UE determines whether to send CSI feedback information to a second device and/or determines the CSI feedback information to be sent to the second device based on the first information.

The second device may be a management entity, for example, an entity specially performing functions such as model training and/or model monitoring. It may also be a base station, or a UE different from the aforementioned UE, etc.

The CSI feedback information is feedback information corresponding to the first reference signal or the CSI.

In some embodiments, the UE determines whether to send the CSI feedback information to the second device and/or determines the CSI feedback information to be sent to the second device based on the first information and at least one of the following;
Configuration information of the first reference signal;
Position information;
Speed information.

Taking the UE determining whether to send the CSI feedback information to the second device based on the first information and the configuration information of the first reference signal as an example, a possible manner is: when the first information meets a first requirement (such as a second condition) and the configuration information of the first reference signal meets a second requirement, sending the CSI feedback information corresponding to the first reference signal to the second device; otherwise, not sending.

Another possible manner is: determining the requirement that the first information needs to meet based on the configuration information of the first reference signal, and sending the CSI feedback information corresponding to the first reference signal to the second device when the first information meets the requirement (such as the second condition); otherwise, not sending.

Another possible manner is: determining whether to send the CSI feedback information corresponding to the first reference signal to the second device based on the combination of the configuration information of the first reference signal and the first information.

In some embodiments, determining whether the first information meets a certain requirement includes: determining whether the first information meets the certain requirement based on a relative relationship between the first information and a certain or some thresholds/a certain or some reference quality information. For example, when the relative relationship between the first information and a first threshold/first reference quality information meets a first relationship, the requirement is not met. For another example, when the relative relationship between the first information and a second threshold/second reference quality information meets a second relationship, the requirement is met. Some examples of the first relationship: greater than; less than; greater than or equal to; less than or equal to. Some examples of the second relationship: greater than; less than; greater than or equal to; less than or equal to. In some embodiments, the first relationship and the second relationship are different relationships. In some embodiments, the first relationship and the second relationship are complementary relationships. For example, the first relationship is less than or equal to, and the second relationship is greater than.
In some embodiments, the above-mentioned first threshold is pre-agreed by the second device and the first device (for example, sent by the second device to the first device, or sent by the first device to the second device, or agreed by a protocol) or independently determined by the first device;
In some embodiments, the above-mentioned second threshold is pre-agreed by the second device and the first device (for example, sent by the second device to the first device, or sent by the first device to the second device, or agreed by a protocol) or independently determined by the first device;
In some embodiments, the above-mentioned first threshold and the second threshold are the same threshold, that is, the value of the first threshold is equal to the value of the second threshold;
In some embodiments, the first reference quality information and the second reference quality information are the same quality information. In some embodiments, the value of the first reference quality information is the same as the value of the second reference quality information.

In some embodiments, the second reference quality information is quality information determined based on a second reference signal, where the second reference signal is configured by the base station or pre-agreed. In some embodiments, the time-domain and/or frequency-domain density of the second reference signal is higher than the time-domain and/or frequency-domain density of the first reference signal.

In some embodiments, the first reference quality information is quality information determined based on a third reference signal, where the third reference signal is configured by the base station or pre-agreed. In some embodiments, the time-domain and/or frequency-domain density of the third reference signal is higher than the time-domain and/or frequency-domain density of the first reference signal. In some embodiments, the third reference signal and the second reference signal are the same reference signal. In some embodiments, the third reference signal and the second reference signal are the same reference signal or the same group of reference signals.

In some embodiments, the UE determining the CSI feedback information to be sent to the second device based on the first information includes: the UE determining whether the CSI feedback information to be sent to the second device includes the CSI (or whether the CSI corresponding to the first reference signal is empty) based on the first information.

In some embodiments, the UE determining the CSI feedback information to be sent to the second device based on at least one of the configuration information of the first reference signal, position information or speed information and the first information includes: the UE determining whether the CSI feedback information to be sent to the second device includes the CSI based on at least one of the configuration information of the first reference signal, position information or speed information and the first information. Some examples are similar to determining whether to send the CSI feedback information to the second device as described above, and will not be repeated here.

In some embodiments, the UE determines one or more of a codebook parameter, a codebook, or a payload size in the CSI feedback information based on the first information. In some embodiments, the codebook parameter is a codebook parameter corresponding to the CSI. In some embodiments, the codebook is a codebook corresponding to the CSI. In some embodiments, the payload is a payload corresponding to the CSI.

Some specific examples are: determining the level corresponding to the first information/the value range corresponding to the first information, and determining one or more of the codebook parameter, codebook, and payload size corresponding to the CSI in the CSI feedback information based on the level/the value range corresponding to the first information. In some embodiments, the UE pre-stores a corresponding relationship between the quality information level/the value range corresponding to the first information and one or more of the codebook parameter, codebook, and payload size.

In some embodiments, the lower the level corresponding to the first information, the higher the codebook precision corresponding to the codebook/the codebook parameter, and the larger the payload, and vice versa.

In some embodiments, the UE determines one or more of the codebook parameter, codebook, and payload size based on the first information and one or more of the following;
Configuration information of the first reference signal;
Position information;
Speed information.

In some embodiments, the CSI feedback information includes information (that is, the second indication information) used to indicate one or more of the codebook parameter, codebook, and payload size.

In some embodiments, there are two or more value ranges, and different value ranges correspond to different codebook parameters and/or payload sizes. The UE determines the codebook parameter and/or payload size based on the value range to which the first information belongs.

In some embodiments, the value range is determined based on one or more thresholds, where the thresholds are pre-agreed by the second device and the UE (for example, sent by the second device to the UE, or sent by the UE to the second device, or agreed by a protocol) or independently determined by the UE.

(5) The second device determines whether the UE has sent the CSI feedback information and/or determines the CSI feedback information sent by the UE based on the configuration information of the first reference signal and/or the CSI feedback configuration corresponding to the first reference signal; or, the second device receives the CSI feedback information sent by the UE and determines the CSI based on the CSI feedback information.

In some embodiments, the second device determines the position where the UE sends the CSI feedback based on the configuration information of the first reference signal and/or the CSI feedback configuration corresponding to the first reference signal, and determines whether the UE has sent the CSI feedback information at the position. A method for the second device to determine whether the UE has sent the CSI feedback information at the position is: the second device detects the CSI feedback information at the position, and if no CSI feedback information is detected, determines that the UE has not sent the CSI feedback information; if the CSI feedback information is detected, determines that the UE has sent the CSI feedback information.

In some embodiments, the model in the embodiment of this disclosure includes an AI/ML model.

Based on the solution of this disclosure, after measuring the reference signal, the UE may determine whether to report the CSI corresponding to the CSI-RS according to the signal quality and what content is included in the CSI report. On the one hand, it can avoid the second device using low-quality CSI for performance monitoring or model training, thereby improving the performance monitoring accuracy/model performance; on the other hand, it can avoid resource waste caused by reporting low-quality CSI.

The model in the embodiment of this disclosure includes but is not limited to an AI model, an ML model, a neural network model, a data-driven technology model, etc. In the embodiment of this disclosure, it is referred to as an AI/ML model, an AI model, etc. The model may be a model deployed on the first device or a model deployed on the second device. The model may be deployed on a UE, a network device, or the like.

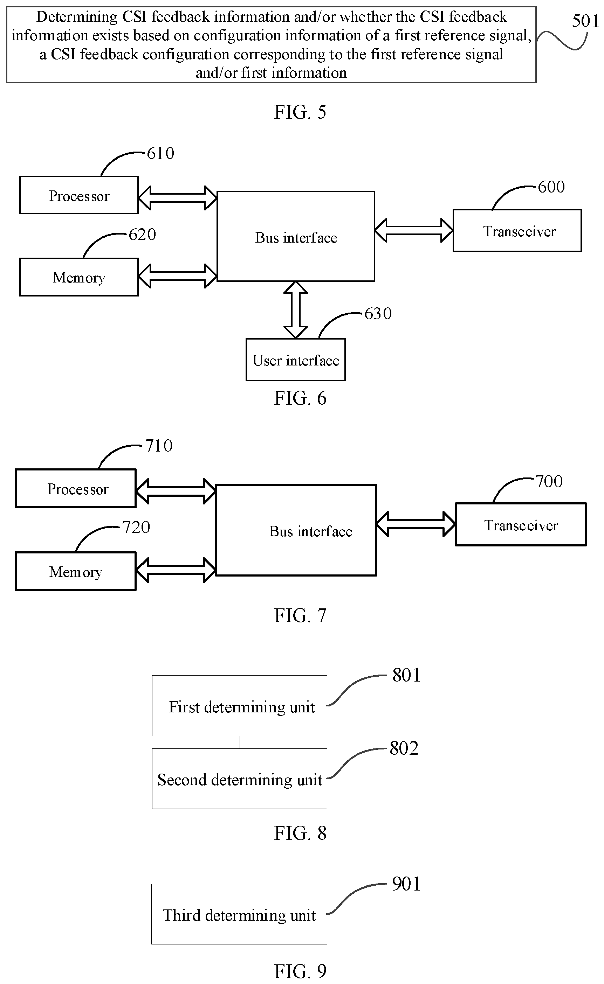

As shown in FIG. 5, an embodiment of this disclosure further provides an information processing method, including:
Step 501: Determining CSI feedback information and/or whether the CSI feedback information exists based on configuration information of a first reference signal, a CSI feedback configuration corresponding to the first reference signal and/or first information;
where the first information is used to indicate one or more of quality of CSI, quality of a channel or a channel estimation value corresponding to the CSI, and quality of a precoding matrix corresponding to the CSI.

In some embodiments, the above-mentioned second device may be a base station, or a network device such as a management entity different from the base station. For example, it is an entity specially performing functions such as model training and/or model monitoring. It may also be a base station, or a UE different from the aforementioned UE, etc., and may also be a server. In some embodiments, the second device is a server capable of performing functions such as model training, model monitoring, and/or data collection.

In the embodiment of this disclosure, in some embodiments, the second device determining the CSI feedback information based on the configuration information of the first reference signal, the CSI feedback configuration corresponding to the first reference signal and/or the first information includes: the second device determining the format, included content, included parameters, and some attributes of the parameters (such as whether related to the first information) of the CSI feedback information based on the configuration information of the first reference signal, the CSI feedback configuration corresponding to the first reference signal and/or the first information.

In some embodiments, the second device determining whether the CSI feedback information exists based on the configuration information of the first reference signal and the CSI feedback configuration corresponding to the first reference signal includes: the second device determining the position where the UE sends the CSI feedback based on the configuration information of the first reference signal and/or the CSI feedback configuration corresponding to the first reference signal, and determining whether the UE has sent the CSI feedback information at the position. A method for the second device to determine whether the UE has sent the CSI feedback information at the position is: the second device detects the CSI feedback information at the position, and if no CSI feedback information is detected, determines that the UE has not sent the CSI feedback information; if the CSI feedback information is detected, determines that the UE has sent the CSI feedback information.

In some embodiments, the CSI feedback information includes CSI feedback information corresponding to the CSI.

In some embodiments, the CSI feedback information includes channel information.

In some embodiments, the CSI feedback information includes one or more of the following:
Channel Quality Indicator (CQI);
Precoding Matrix Indicator (PMI);
CSI-RS Resource Indicator (CRI);
SS/PBCH Block Resource Indicator (SSBRI);
Layer Indicator (LI);
Rank Indicator (RI);
Layer 1 Reference Signal Received Power (L1-RSRP);
Layer 1 Signal to Interference Plus Noise Ratio (L1-SINR);
Capability Set Index;
Codebook parameter indication information;
Codebook indication information;
Payload size indication information.

In some embodiments, the CSI feedback information includes at least one of the following:
A codebook parameter, in some embodiments, the codebook parameter is a codebook parameter corresponding to the CSI;
A codebook, in some embodiments, the codebook is a codebook corresponding to the CSI;
A payload size, in some embodiments, the payload size is a payload size corresponding to the CSI.

In some embodiments, the method of the embodiment of this disclosure further includes:
Obtaining the first information sent by the first device.

In some embodiments, the first information is first information corresponding to the configuration information of the first reference signal and/or the CSI feedback configuration corresponding to the first reference signal.

In some embodiments, the determining CSI feedback information and/or whether the CSI feedback information exists based on the first information includes:
In a case where the first information meets a first condition, determining that no CSI feedback information exists or determining that the CSI feedback information does not include the CSI corresponding to the first information;
In a case where the first information meets a second condition, determining that the CSI feedback information exists or determining that the CSI feedback information includes the CSI corresponding to the first information.

In some embodiments, the CSI feedback information includes first indication information, where the first indication information is used to indicate whether the CSI feedback information includes the CSI.

In some embodiments, the first information meeting the second condition includes: the first information does not meet the first condition.

In some embodiments, the first condition includes:
A relative relationship between the first information and a first threshold or first reference quality information meets a first relationship;
and/or the second condition includes:
   A relative relationship between the first information and a second threshold or second reference quality information meets a second relationship.

For example, the above-mentioned first relationship may be greater than, less than, greater than or equal to, or less than or equal to;
the above-mentioned second relationship may be greater than, less than, greater than or equal to, or less than or equal to;
In some embodiments, the above-mentioned first relationship and the second relationship are different relationships.

In some embodiments, the above-mentioned first relationship and the second relationship are complementary relationships. For example, the first relationship includes being less than or equal to a threshold or reference quality information, and the second relationship includes being greater than the threshold or reference quality information.

In some embodiments, the above-mentioned first threshold is pre-agreed by the second device and the first device (for example, sent by the second device to the first device, or sent by the first device to the second device, or agreed by a protocol) or independently determined by the first device.

In some embodiments, the above-mentioned second threshold is pre-agreed by the second device and the first device (for example, sent by the second device to the first device, or sent by the first device to the second device, or agreed by a protocol) or independently determined by the first device.

In some embodiments, the above-mentioned first threshold and the second threshold are the same threshold, that is, the value of the first threshold is equal to the value of the second threshold.

In some embodiments, the first reference quality information and the second reference quality information are the same quality information. In some embodiments, the value of the first reference quality information is the same as the value of the second reference quality information.

The first condition and the second condition have been described in detail in the method embodiment on the first device side, and will not be repeated here.

In some embodiments, the determining CSI feedback information and/or whether the CSI feedback information exists based on configuration information of a first reference signal, a CSI feedback configuration corresponding to the first reference signal and/or first information includes:
Determining the CSI feedback information and/or whether the CSI feedback information exists based on at least one of the configuration information of the first reference signal, the CSI feedback configuration corresponding to the first reference signal or the first information, and a second parameter;
where the second parameter includes at least one of the following:
   Position information of the first device; in some embodiments, the position information includes absolute position or relative position of the first device;
   Speed information of the first device. The speed information is information used to indicate the speed of the first device. In some embodiments, the speed information is an index information, and the speed of the first device can be determined by looking up a table or a corresponding relationship based on the speed information of the first device. In some embodiments, the speed information may be information related to Doppler, and/or information related to time domain, etc.

In the embodiment of this disclosure, the above-mentioned position information is information used to indicate the position of the first device. The second device can determine the position of the first device based on the position information of the first device. For example, the position information of the first device includes one or more of the following:
Reference Signal Time Difference (RSTD);
Reference Signal Received Power (RSRP);
Relative Time Difference (RTD), where the RTD represents a delay difference between multipaths of a measurement cell. For example, if P paths are detected, P-1 RTDs may be reported, and the value of P may be configured by the network side, and the second device may position the first device based on the RTD;
SNR or SINR;
Transmit-receive time difference of the first device;
Time of Arrival (TOA) measurement value;
Positioning Reference Signal (PRS) resource ID or PRS resource set ID;
Angle information;
A time stamp associated with a measurement value of the first device, in some embodiments, the time stamp includes a system frame number and/or a slot number;

Position index. The above-mentioned position information and speed information have been described in detail in the method embodiment on the terminal side, and will not be repeated here.

In some embodiments, the determining the CSI feedback information based on at least one of the configuration information of the first reference signal, the CSI feedback configuration corresponding to the first reference signal or the first information, and a second parameter includes:
Determining at least one of a codebook parameter, a codebook, or a payload size in the CSI feedback information based on at least one of the configuration information of the first reference signal, the CSI feedback configuration corresponding to the first reference signal or the first information, and the second parameter.

In some embodiments, the codebook parameter, the codebook and/or the payload size are a codebook parameter, a codebook and/or a payload size corresponding to the CSI.

In some embodiments, the codebook parameter, the codebook and/or the payload size are a codebook parameter, a codebook and/or a payload size corresponding to the CSI. In some embodiments, the configuration information of the first reference signal includes configuration information of a resource of the first reference signal and/or configuration information of a resource set of the first reference signal.

Some examples of the configuration information of the resource of the first reference signal and/or the configuration information of the resource set of the first reference signal include one or more of the following information about the resource of the first reference signal and/or the resource set of the first reference signal:
Number of antenna ports;
Time-domain density;
Frequency-domain density;
Period;
Power information;
Pattern.

In some embodiments, the pattern is a transmission pattern of a resource in a slot and/or a PRB.

In some embodiments, the CSI feedback information includes second indication information, where the second indication information is used to indicate at least one of a codebook parameter, a codebook, or a payload size.

In some embodiments, the method of the embodiment of this disclosure further includes at least one of the following:
Sending the first reference signal and/or a second reference signal;
Sending configuration information of the first reference signal.

In some embodiments, in a case where the above-mentioned second device is a base station, sending the first reference signal and/or the second reference signal; and/or sending the configuration information of the first reference signal.

In some embodiments, the first information includes at least one of the following:
Channel quality information;
Channel information;
Quality level information;
Error information.

In some embodiments, the channel quality information includes at least one of the following:
A1: Signal-to-Interference-Noise Ratio (SINR) or Signal-to-Noise Ratio (SNR);
A2: Reference Signal Received Power (RSRP);
A3: Channel Quality Indicator (CQI).

For the above-mentioned item A1, it may specifically include at least one of the following:
L1-SINR/ L1-SNR;
L3-SINR/ L3-SNR.

In some embodiments, the SINR/ SNR is an SINR/ SNR determined based on a channel estimation value, so that the quality of the channel estimation value can be determined based on the SINR/ SNR.

In some embodiments, the L1-SINR includes a linear average of Signal-to-Interference-Noise Ratios of Resource Elements (REs) carrying reference signals. In some embodiments, the reference signals include the first reference signal and/or the second reference signal. In some embodiments, the L1-SNR includes a linear average of Signal-to-Noise Ratios of Resource Elements (REs) carrying reference signals. In some embodiments, the reference signals include the first reference signal and/or the second reference signal.

In some embodiments, the L3-SINR/ L3-SNR includes a higher layer filtered L3-SINR/ L3-SNR. It may be a higher layer filtered SINR/ higher layer filtered SNR determined by performing higher layer filtering on at least one L1-SINR/ L1-SNR. The higher layer filtered SINR/ higher layer filtered SNR may also be described as a higher layer SINR/ higher layer SNR or a filtered SINR/ filtered SNR. For example, if the reference signal is a periodic CSI-RS, the terminal device may determine the higher layer filtered SINR/ higher layer filtered SNR based on CSI-RS transmissions of multiple periods.

A manner of calculating the higher layer filtered SINR/ higher layer filtered SNR may be adopting an L3 filtering manner. The L3 filtering manner is as follows (the L1-SINR/ L1-SNR is the measurement quantity *M*ₙ in the following formula):
${F}_{n} = \left(1-a\right) * {F}_{n - 1} + a * {M}_{n} ;$
where *M*ₙ is the latest measurement result received from the physical layer, and n is an integer greater than or equal to 1; *F*ₙ is an updated filtered measurement result (such as the higher layer filtered SINR/ higher layer filtered SNR in this disclosure); *F*ₙ₋₁ is a previous filtered measurement result, where *F*₀ is set to *M*₁ (that is, the first measurement result received from the physical layer); for a *MeasObjectNR* (NR measurement object), *a* = 1/2^{(***ki***/4)}, where *kᵢ* is a filtering coefficient of a corresponding measurement quantity of the *i*-th *QuantityConfigNR* (NR measurement quantity configuration) in a *quantityConfigNR-List* (NR measurement quantity configuration list), and *i* is indicated by a *quantityConfigIndex* (measurement quantity configuration index) in the *MeasObjectNR*; for other measurements, *a* = 1/2^{(*k*/4)}, where *k* is a filtering coefficient of a corresponding measurement quantity received by a *quantityConfig* (measurement quantity configuration); for a Universal Terrestrial Radio Access-Frequency Division Duplex (UTRA-FDD) system, *a* = 1/2^{(*k*/4)}, where *k* is a filtering coefficient of a corresponding measurement quantity received by a *quantityConfigUTRA-FDD* (UTRA-FDD measurement quantity configuration) in the *QuantityConfig* (measurement quantity configuration).

In some embodiments, the SINR/ SNR is an SINR/SNR determined based on a precoding matrix or a channel matrix corresponding to the first CSI, so that the quality of the channel or precoding matrix corresponding to the CSI can be determined based on the SINR/ SNR.

For the above-mentioned item A2, it may specifically include at least one of the following:
L1-RSRP;
L3-RSRP.

In some embodiments, the RSRP is an RSRP determined based on a channel estimation value, so that the quality of the channel estimation value can be determined based on the RSRP.

In some embodiments, the RSRP is an RSRP determined based on the CSI, for example, an RSRP determined by using the first CSI as a precoding matrix, so that the quality of the CSI can be determined based on the RSRP.

In some embodiments, the L3-RSRP includes a higher layer filtered L3-RSRP. It may be a higher layer filtered L3-RSRP determined by performing higher layer filtering on at least one L3-RSRP. The higher layer filtered L3-RSRP may also be described as a higher layer L3-RSRP or a filtered L3-RSRP. For example, if the reference signal is a periodic CSI-RS, the terminal device may determine the higher layer filtered L3-RSRP based on CSI-RS transmissions of multiple periods.

A manner of calculating the higher layer filtered L3-RSRP may be adopting an L3 filtering manner. The L3 filtering manner is as follows (the L1-RSRP is the measurement quantity *M*ₙ in the following formula):
${F}_{n} = \left(1-a\right) * {F}_{n - 1} + a * {M}_{n} ;$
where *M*ₙ is the latest measurement result received from the physical layer, and n is an integer greater than or equal to 1; *F*ₙ is an updated filtered measurement result (such as the higher layer filtered RSRP in this disclosure); *F*ₙ₋₁ is a previous filtered measurement result, where *F*₀ is set to *M*₁ (that is, the first measurement result received from the physical layer); for a *MeasObjectNR* (NR measurement object), *a* = 1/2^{(***ki***/4)}, where *kᵢ* is a filtering coefficient of a corresponding measurement quantity of the *i*-th *QuantityConfigNR* (NR measurement quantity configuration) in a *quantityConfigNR-List* (NR measurement quantity configuration list), and *i* is indicated by a *quantityConfigIndex* (measurement quantity configuration index) in the *MeasObjectNR*; for other measurements, *a* = 1/2^{(*k*/4)}, where *k* is a filtering coefficient of a corresponding measurement quantity received by a *quantityConfig* (measurement quantity configuration); for a Universal Terrestrial Radio Access-Frequency Division Duplex (UTRA-FDD) system, *a* = 1/2^{(*k*/4)}, where *k* is a filtering coefficient of a corresponding measurement quantity received by a *quantityConfigUTRA-FDD* (UTRA-FDD measurement quantity configuration) in the *QuantityConfig* (measurement quantity configuration).

For the above-mentioned item A3, the above-mentioned CQI may be a CQI determined based on the CSI, so that the quality of the CSI can be determined based on the CQI.

In some embodiments, the channel information includes information used to indicate at least one of the following corresponding to a channel:
Delay spread; in some embodiments, the delay spread of the channel corresponding to the CSI;
Angle spread; in some embodiments, the angle spread of the channel corresponding to the CSI;
Average delay; in some embodiments, the average delay of the channel corresponding to the CSI;
Doppler; in some embodiments, the Doppler of the channel corresponding to the CSI;
Doppler spread; in some embodiments, the Doppler spread of the channel corresponding to the CSI;
Mean Square Error (MSE); in some embodiments, the MSE of the channel corresponding to the CSI, for example, the MSE between the measured value and the reported value of each Resource Element (RE);
Normalized Mean Square Error (NMSE); in some embodiments, the NMSE of the channel corresponding to the CSI, for example, the NMSE between the measured value and the reported value of each RE;
Channel statistics, which include statistics obtained by counting channels based on multiple moments or multiple reference signals. In some embodiments, the multiple moments include transmission moments of multiple first reference signals, and the statistics include one or more of delay spread, angle spread, average delay, Doppler, and Doppler spread. The multiple first reference signals may correspond to the same signal resource or different signal resources;
Distribution information of the channel, such as the distribution type, mean value, variance, etc., followed by the channel envelope. For another example, the Probability Density Function (PDF) distribution corresponding to the channel.

In some embodiments, the quality level information includes at least one of the following:
Quality level of the CSI;
Quality level of a channel estimation value corresponding to the CSI;
Quality level of a precoding matrix corresponding to the CSI.

In some embodiments, the first device and the second device pre-agree on a manner of dividing quality levels. For example, the second device indicates a quality level table to the first device, and the first device performs channel estimation by using the first reference signal corresponding to the CSI, and determines the quality level of the channel estimation value corresponding to the CSI based on the quality of the channel estimation value and the quality level table. For another example, the second device indicates a quality level table to the first device, and the first device determines the quality level corresponding to the CSI based on the quality level table. For another example, the second device indicates value ranges corresponding to multiple levels of quality to the first device, and the first device determines the quality level based on the value ranges.

In some embodiments, the error information includes at least one of the following:
Error information of the CSI;
Error information of a channel or a channel estimation value corresponding to the CSI;
Error information of a precoding matrix corresponding to the CSI.

In some embodiments, the above-mentioned error information may also be referred to as deviation information.

In some embodiments, the error information includes at least one of the following:
B1: Distance error;
B2: MSE, NMSE, or Minimum Mean Square Error (MMSE);
B3: Error information of the CQI;
B4: Error information of channel statistics.

For the above-mentioned item B1:
In some embodiments, the distance error includes an error of Euclidean distance;
In some embodiments, the above-mentioned distance error may include a distance between the CSI and a reference CSI, where the reference CSI may be indicated by the base station or determined by the terminal. In some embodiments, the reference CSI is a statistic.

In some embodiments, the above-mentioned distance error is a distance between a channel estimation value corresponding to the CSI and a reference channel, where the reference channel may be indicated by the base station or determined by the terminal. In some embodiments, the reference channel is a statistic;
In some embodiments, the above-mentioned distance error is a distance between a precoding matrix corresponding to the CSI and a reference distance, where the reference matrix may be indicated by the base station or determined by the terminal. In some embodiments, the reference matrix is a statistic.

For the above-mentioned item B2:
In some embodiments, the MSE/NMSE/MMSE is an MSE/NMSE/MMSE corresponding to the CSI;
In some embodiments, the MSE/NMSE/MMSE is an MSE/NMSE/MMSE of a precoding matrix corresponding to the CSI;
In some embodiments, the MSE/NMSE/MMSE is an MSE/NMSE/MMSE of a channel (or a channel estimation value) corresponding to the CSI;
As an implementation manner, the MSE/NMSE/MMSE is an MSE/NMSE/MMSE determined based on channels (or channel estimation values)/CSI at multiple frequency domain positions;
As an implementation manner, the MSE/NMSE/MMSE is an MSE/NMSE/MMSE determined based on channels (or channel estimation values)/CSI at multiple time domain positions;
As an implementation manner, the MSE/NMSE/MMSE is an MSE/NMSE/MMSE determined based on channels (or channel estimation values)/CSI at multiple time domain and frequency domain positions;
In some embodiments, the MSE/NMSE/MMSE is the MSE/NMSE/MMSE between the measured value and the reported value at each time domain and/or frequency domain position. In some embodiments, the measured value and the reported value include but are not limited to: channel estimation value, precoding matrix and/or CSI, etc.

In some embodiments, the MSE/NMSE/MMSE is an MSE/NMSE/MMSE determined by the UE based on the CSI and multiple CSIs before and/or after the CSI;
In some embodiments, the MSE/NMSE/MMSE is an MSE/NMSE/MMSE determined by the UE based on the CSI and multiple channel estimation values before and/or after the CSI;
In some embodiments, the above-mentioned "before and/or after" is determined based on the transmission time of the CSI, or the calculation time of the CSI, or the sending or receiving time of the first reference signal corresponding to the CSI.

For the above-mentioned item B4:
The error information of the channel statistics may be error information of one or more of the following statistics:
Delay spread;
Angle spread;
Average delay;
Doppler;
Doppler spread;

Distribution information of the channel, such as the distribution type, mean value, variance, etc., followed by the channel envelope; for another example, the PDF distribution corresponding to the channel.

In some embodiments, the error information is error information determined based on one or more of a channel estimation value, reference signal information corresponding to the CSI, a UE position, a channel distribution, and the like.

The first information has been described in detail in the method embodiment on the first device side, and will not be repeated here.

In the embodiment of this disclosure, CSI feedback information and/or whether CSI feedback information exists is determined based on configuration information of a first reference signal, a CSI feedback configuration corresponding to the first reference signal and/or first information. On the one hand, it can avoid the second device using low-quality CSI for performance monitoring or model training, thereby improving the performance monitoring accuracy/model performance; on the other hand, it can avoid resource waste caused by reporting low-quality CSI.

It should be noted that the information processing method performed by the second device is a method corresponding to the information processing method performed by the above-mentioned first device, and the specific interaction process between the two has been described in detail in the embodiment on the first device side, and will not be repeated here.

As shown in FIG. 6, an embodiment of this disclosure provides an information processing apparatus applied to a first device, including a memory 620, a transceiver 600, and a processor 610;
the memory 620 is configured to store a computer program; the transceiver 600 is configured to send and receive data under the control of the processor 610; the processor 610 is configured to read the computer program in the memory 620 and perform the following operations:
determining first information corresponding to Channel State Information (CSI), where the first information is used to indicate one or more of quality of the CSI, quality of a channel or a channel estimation value corresponding to the CSI, and quality of a precoding matrix corresponding to the CSI;
determining whether to send CSI feedback information to a second device and/or determining the CSI feedback information to be sent to the second device based on the first information.

In FIG. 6, the bus architecture may include any number of interconnected buses and bridges, and specifically links various circuits of one or more processors represented by the processor 610 and a memory represented by the memory 620. The bus architecture can also link various other circuits such as peripheral devices, voltage regulators, and power management circuits, which are all known in the art, so they will not be further described herein. The bus interface provides an interface. The transceiver 600 may be a plurality of elements, that is, including a transmitter and a receiver, and provides a unit for communicating with various other devices on a transmission medium, where the transmission medium includes wireless channels, wired channels, optical cables, and other transmission media. For different user devices, the user interface 630 may also be an interface capable of connecting externally and internally to required devices, and the connected devices include but are not limited to a keypad, a display, a speaker, a microphone, a joystick, and the like.

The processor 610 is responsible for managing the bus architecture and general processing, and the memory 620 can store data used by the processor 610 when performing operations.

In some embodiments, the processor 610 may be a Central Processing Unit (CPU), an Application Specific Integrated Circuit (ASIC), a Field-Programmable Gate Array (FPGA), or a Complex Programmable Logic Device (CPLD), and the processor may also adopt a multi-core architecture.

The processor performs any of the methods provided by the embodiments of this disclosure according to the obtained executable instructions by calling the computer program stored in the memory. The processor and the memory may also be physically separated.

In some embodiments, the processor further performs the following operations:
receiving a first reference signal;
determining the CSI based on the first reference signal.

In some embodiments, the processor further performs the following operations:
determining the first information corresponding to the CSI based on configuration information of the first reference signal and/or a second reference signal.

In some embodiments, the processor further performs the following operations:
in a case where the first information meets a first condition, not sending the CSI feedback information to the second device or determining that the CSI feedback information to be sent to the second device does not include the CSI;
in a case where the first information meets a second condition, determining to send the CSI feedback information to the second device or determining that the CSI feedback information to be sent to the second device includes the CSI.

In some embodiments, the CSI feedback information includes first indication information, where the first indication information is used to indicate whether the CSI feedback information includes the CSI.

In some embodiments, the first condition includes:
a relative relationship between the first information and a first threshold or first reference quality information meets a first relationship;
and/or the second condition includes:
   a relative relationship between the first information and a second threshold or second reference quality information meets a second relationship.

In some embodiments, the processor further performs the following operations:
the determining the CSI feedback information to be sent to the second device based on the first information includes:
determining at least one of a codebook parameter, a codebook, or a payload size in the CSI feedback information based on the first information.

In some embodiments, the processor further performs the following operations:
determining whether to send the CSI feedback information to the second device and/or determining the CSI feedback information to be sent to the second device based on the first information and a first parameter;
where the first parameter includes at least one of the following:
configuration information of the first reference signal, where the first reference signal is a reference signal used to determine the CSI;
position information of the first device;
speed information of the first device.

In some embodiments, the processor further performs the following operations:
determining at least one of a codebook parameter, a codebook, or a payload size in the CSI feedback information based on the first information and the first parameter.

In some embodiments, the CSI feedback information includes second indication information, where the second indication information is used to indicate at least one of a codebook parameter, a codebook, or a payload size.

In some embodiments, the processor further performs the following operations:
sending the first information.

In some embodiments, the first information includes at least one of the following:
Channel quality information;
Channel information;
Quality level information;
Error information.

In some embodiments, the channel quality information includes at least one of the following:
Signal-to-Interference-Noise Ratio (SINR) or Signal-to-Noise Ratio (SNR);
Reference Signal Received Power (RSRP);
Channel Quality Indicator (CQI).

In some embodiments, the channel information includes information used to indicate at least one of the following corresponding to a channel:
Delay spread;
Angle spread;
Average delay;
Doppler;
Doppler spread;
Mean Square Error (MSE);
Normalized Mean Square Error (NMSE);
Channel statistics;
Distribution information of the channel.

In some embodiments, the error information includes at least one of the following:
Error information of the CSI;
Error information of a channel or a channel estimation value corresponding to the CSI;
Error information of a precoding matrix corresponding to the CSI.

In some embodiments, the error information includes at least one of the following:
Distance error;
MSE, NMSE, or Minimum Mean Square Error (MMSE);
Error information of the CQI;
Error information of channel statistics.

In some embodiments, the CSI feedback information includes CSI feedback information corresponding to the CSI.

It should be noted that the above-mentioned apparatus provided by the embodiment of this disclosure can implement all the method steps implemented by the above-mentioned information processing method embodiment applied to the first device, and can achieve the same technical effect. Here, the parts and beneficial effects of this embodiment that are the same as those of the method embodiment will not be described in detail.

As shown in FIG. 7, an embodiment of this disclosure further provides an information processing apparatus, including a memory 720, a transceiver 700, and a processor 710;
the memory 720 is configured to store a computer program; the transceiver 700 is configured to send and receive data under the control of the processor; the processor 710 is configured to read the computer program in the memory and perform the following operations:
determining CSI feedback information and/or whether the CSI feedback information exists based on configuration information of a first reference signal, a CSI feedback configuration corresponding to the first reference signal and/or first information;
where the first information is used to indicate one or more of quality of CSI, quality of a channel or a channel estimation value corresponding to the CSI, and quality of a precoding matrix corresponding to the CSI.

In FIG. 7, the bus architecture may include any number of interconnected buses and bridges, and specifically links various circuits of one or more processors represented by the processor 710 and a memory represented by the memory 720. The bus architecture can also link various other circuits such as peripheral devices, voltage regulators, and power management circuits, which are all known in the art, so they will not be further described herein. The bus interface provides an interface. The transceiver 700 may be a plurality of elements, that is, including a transmitter and a receiver, and provides a unit for communicating with various other devices on a transmission medium, where the transmission medium includes wireless channels, wired channels, optical cables, and other transmission media. The processor 710 is responsible for managing the bus architecture and general processing, and the memory 720 can store data used by the processor 710 when performing operations.

The processor 710 may be a Central Processing Unit (CPU), an Application Specific Integrated Circuit (ASIC), a Field-Programmable Gate Array (FPGA), or a Complex Programmable Logic Device (CPLD), and the processor may also adopt a multi-core architecture.

In some embodiments, the CSI feedback information includes at least one of the following:
A codebook parameter;
A codebook;
A payload size.

In some embodiments, the processor further performs the following operations:
obtaining the first information sent by a first device.

In some embodiments, the first information is first information corresponding to the configuration information of the first reference signal and/or the CSI feedback configuration corresponding to the first reference signal.

In some embodiments, the processor further performs the following operations:
in a case where the first information meets a first condition, determining that no CSI feedback information exists or determining that the CSI feedback information does not include the CSI corresponding to the first information;
in a case where the first information meets a second condition, determining that the CSI feedback information exists or determining that the CSI feedback information includes the CSI corresponding to the first information.

In some embodiments, the CSI feedback information includes first indication information, where the first indication information is used to indicate whether the CSI feedback information includes the CSI.

In some embodiments, the first condition includes:
a relative relationship between the first information and a first threshold or first reference quality information meets a first relationship;
and/or the second condition includes:
   a relative relationship between the first information and a second threshold or second reference quality information meets a second relationship.

In some embodiments, the determining CSI feedback information and/or whether the CSI feedback information exists based on configuration information of a first reference signal, a CSI feedback configuration corresponding to the first reference signal and/or first information includes:
determining the CSI feedback information and/or whether the CSI feedback information exists based on at least one of the configuration information of the first reference signal, the CSI feedback configuration corresponding to the first reference signal or the first information, and a second parameter;
where the second parameter includes at least one of the following:
position information of the first device;
speed information of the first device.

In some embodiments, the processor further performs the following operations:
determining at least one of a codebook parameter, a codebook, or a payload size in the CSI feedback information based on at least one of the configuration information of the first reference signal, the CSI feedback configuration corresponding to the first reference signal or the first information, and the second parameter.

In some embodiments, the CSI feedback information includes second indication information, where the second indication information is used to indicate at least one of a codebook parameter, a codebook, or a payload size.

In some embodiments, the processor further performs at least one of the following operations:
Sending the first reference signal and/or a second reference signal;
Sending configuration information of the first reference signal.

In some embodiments, the first information includes at least one of the following:
Channel quality information;
Channel information;
Quality level information;
Error information.

In some embodiments, the channel quality information includes at least one of the following:
Signal-to-Interference-Noise Ratio (SINR) or Signal-to-Noise Ratio (SNR);
Reference Signal Received Power (RSRP);
Channel Quality Indicator (CQI).

In some embodiments, the channel information includes information used to indicate at least one of the following corresponding to a channel:
Delay spread;
Angle spread;
Average delay;
Doppler;
Doppler spread;
Mean Square Error (MSE);
Normalized Mean Square Error (NMSE);
Channel statistics;
Distribution information of the channel.

In some embodiments, the error information includes at least one of the following:
Error information of the CSI;
Error information of a channel or a channel estimation value corresponding to the CSI;
Error information of a precoding matrix corresponding to the CSI.

In some embodiments, the error information includes at least one of the following:
Distance error;
MSE, NMSE, or Minimum Mean Square Error (MMSE);
Error information of the CQI;
Error information of channel statistics.

In some embodiments, the CSI feedback information includes CSI feedback information corresponding to the CSI.

It should be noted that the above-mentioned apparatus provided by the embodiment of this disclosure can implement all the method steps implemented by the above-mentioned information processing method embodiment applied to the second device, and can achieve the same technical effect. Here, the parts and beneficial effects of this embodiment that are the same as those of the method embodiment will not be described in detail.

As shown in FIG. 8, an embodiment of this disclosure further provides an information processing apparatus, including:
a first determining unit 801, configured to determine first information corresponding to Channel State Information (CSI), where the first information is used to indicate one or more of quality of the CSI, quality of a channel or a channel estimation value corresponding to the CSI, and quality of a precoding matrix corresponding to the CSI;
a second determining unit 802, configured to determine whether to send CSI feedback information to a second device and/or determine the CSI feedback information to be sent to the second device based on the first information.

In some embodiments, the apparatus of the embodiment of this disclosure further includes:
a first receiving unit, configured to receive a first reference signal;
a fourth determining unit, configured to determine the CSI based on the first reference signal.

In some embodiments, the fourth determining unit is configured to determine the first information corresponding to the CSI based on configuration information of the first reference signal and/or a second reference signal.

In some embodiments, the second determining unit is configured to:
in a case where the first information meets a first condition, not send the CSI feedback information to the second device or determine that the CSI feedback information to be sent to the second device does not include the CSI;
in a case where the first information meets a second condition, determine to send the CSI feedback information to the second device or determine that the CSI feedback information to be sent to the second device includes the CSI.

In some embodiments, the CSI feedback information includes first indication information, where the first indication information is used to indicate whether the CSI feedback information includes the CSI.

In some embodiments, the first condition includes:
a relative relationship between the first information and a first threshold or first reference quality information meets a first relationship;
and/or the second condition includes:
a relative relationship between the first information and a second threshold or second reference quality information meets a second relationship.

In some embodiments, the second determining unit is configured to:
determine at least one of a codebook parameter, a codebook, or a payload size in the CSI feedback information based on the first information.

In some embodiments, the second determining unit is configured to:
determine whether to send the CSI feedback information to the second device and/or determine the CSI feedback information to be sent to the second device based on the first information and a first parameter;
where the first parameter includes at least one of the following:
configuration information of a first reference signal, where the first reference signal is a reference signal used to determine the CSI;
position information of the first device;
speed information of the first device.

In some embodiments, the second determining unit is configured to:
determine at least one of a codebook parameter, a codebook, or a payload size in the CSI feedback information based on the first information and the first parameter.

In some embodiments, the CSI feedback information includes second indication information, where the second indication information is used to indicate at least one of a codebook parameter, a codebook, or a payload size.

In some embodiments, the apparatus of the embodiment of this disclosure further includes:
a first sending unit, configured to send the first information.

In some embodiments, the first information includes at least one of the following:
Channel quality information;
Channel information;
Quality level information;
Error information.

In some embodiments, the channel quality information includes at least one of the following:
Signal-to-Interference-Noise Ratio (SINR) or Signal-to-Noise Ratio (SNR);
Reference Signal Received Power (RSRP);
Channel Quality Indicator (CQI).

In some embodiments, the channel information includes information used to indicate at least one of the following corresponding to a channel:
Delay spread;
Angle spread;
Average delay;
Doppler;
Doppler spread;
Mean Square Error (MSE);
Normalized Mean Square Error (NMSE);
Channel statistics;
Distribution information of the channel.

In some embodiments, the error information includes at least one of the following:
Error information of the CSI;
Error information of a channel or a channel estimation value corresponding to the CSI;
Error information of a precoding matrix corresponding to the CSI.

In some embodiments, the error information includes at least one of the following:
Distance error;
MSE, NMSE, or Minimum Mean Square Error (MMSE);
Error information of the CQI;
Error information of channel statistics.

In some embodiments, the CSI feedback information includes CSI feedback information corresponding to the CSI.

It should be noted that the above-mentioned apparatus provided by the embodiment of this disclosure can implement all the method steps implemented by the above-mentioned information processing method embodiment applied to the first device, and can achieve the same technical effect. Here, the parts and beneficial effects of this embodiment that are the same as those of the method embodiment will not be described in detail.

As shown in FIG. 9, an embodiment of the present disclosure further provides an information processing apparatus, including:
a third determining unit 901, configured to determine CSI feedback information and/or whether the CSI feedback information exists based on configuration information of a first reference signal, a CSI feedback configuration corresponding to the first reference signal and/or first information;
where the first information is used to indicate one or more of quality of CSI, quality of a channel or a channel estimation value corresponding to the CSI, and quality of a precoding matrix corresponding to the CSI.

In some embodiments, the CSI feedback information includes at least one of the following:
a codebook parameter;
a codebook;
a payload size.

In some embodiments, the apparatus of the embodiment of the present disclosure further includes:
an obtaining unit, configured to obtain the first information sent by a first device.

In some embodiments, the first information is first information corresponding to the configuration information of the first reference signal and/or the CSI feedback configuration corresponding to the first reference signal.

In some embodiments, the third determining unit is configured to:
in a case where the first information meets a first condition, determine that no CSI feedback information exists or determine that the CSI feedback information does not include the CSI corresponding to the first information;
in a case where the first information meets a second condition, determine that the CSI feedback information exists or determine that the CSI feedback information includes the CSI corresponding to the first information.

In some embodiments, the CSI feedback information includes first indication information, where the first indication information is used to indicate whether the CSI feedback information includes the CSI.

In some embodiments, the first condition includes:
a relative relationship between the first information and a first threshold or first reference quality information meets a first relationship;
and/or the second condition includes:
   a relative relationship between the first information and a second threshold or second reference quality information meets a second relationship.

In some embodiments, the third determining unit is configured to:
determine the CSI feedback information and/or whether the CSI feedback information exists based on at least one of the configuration information of the first reference signal, the CSI feedback configuration corresponding to the first reference signal or the first information, and a second parameter;
where the second parameter includes at least one of the following:
position information of the first device;
speed information of the first device.

In some embodiments, the third determining unit is configured to:
determine at least one of a codebook parameter, a codebook, or a payload size in the CSI feedback information based on at least one of the configuration information of the first reference signal, the CSI feedback configuration corresponding to the first reference signal or the first information, and the second parameter.

In some embodiments, the CSI feedback information includes second indication information, where the second indication information is used to indicate at least one of a codebook parameter, a codebook, or a payload size.

In some embodiments, the apparatus of the embodiment of the present disclosure further includes: a second sending unit configured to perform at least one of the following:
sending the first reference signal and/or a second reference signal;
sending configuration information of the first reference signal.

In some embodiments, the first information includes at least one of the following:
channel quality information;
channel information;
quality level information;
error information.

In some embodiments, the channel quality information includes at least one of the following:
Signal-to-Interference-Noise Ratio (SINR) or Signal-to-Noise Ratio (SNR);
Reference Signal Received Power (RSRP);
Channel Quality Indicator (CQI).

In some embodiments, the channel information includes information used to indicate at least one of the following corresponding to a channel:
delay spread;
angle spread;
average delay;
Doppler;
Doppler spread;
Mean Square Error (MSE);
Normalized Mean Square Error (NMSE);
channel statistics;
distribution information of the channel.

In some embodiments, the error information includes at least one of the following:
error information of the CSI;
error information of a channel or a channel estimation value corresponding to the CSI;
error information of a precoding matrix corresponding to the CSI.

In some embodiments, the error information includes at least one of the following:
distance error;
MSE, NMSE, or Minimum Mean Square Error (MMSE);
error information of the CQI;
error information of channel statistics.

In some embodiments, the CSI feedback information includes CSI feedback information corresponding to the CSI.

It should be noted that the above-mentioned apparatus provided by the embodiment of this disclosure can implement all the method steps implemented by the above-mentioned information processing method embodiment applied to the second device, and can achieve the same technical effect. Here, the parts and beneficial effects of this embodiment that are the same as those of the method embodiment will not be described in detail.

It should be noted that the division of units in the embodiments of the present disclosure is schematic and only a logical function division. In actual implementation, there may be other division methods. In addition, each functional unit in each embodiment of the present disclosure may be integrated into one processing unit, or each unit may exist physically alone, or two or more units may be integrated into one unit. The above-mentioned integrated units may be implemented in the form of hardware or in the form of software functional units.

If the integrated unit is implemented in the form of a software functional unit and sold or used as an independent product, it may be stored in a processor-readable storage medium. Based on such an understanding, the technical solution of the present disclosure essentially or the part that contributes to the prior art or all or part of the technical solution may be embodied in the form of a software product. The computer software product is stored in a storage medium and includes several instructions to enable a computer device (which may be a personal computer, a server, or a network device, etc.) or a processor to perform all or part of the steps of the methods described in the various embodiments of the present disclosure. The aforementioned storage medium includes: a USB flash drive, a mobile hard disk, a Read-Only Memory (ROM), a Random Access Memory (RAM), a magnetic disk, an optical disc, and other various media that can store program codes.

In some embodiments of the present disclosure, a processor-readable storage medium is also provided. The processor-readable storage medium stores program instructions, and the program instructions are used to enable the processor to perform all the steps implemented by the method embodiment performed by the above-mentioned first device or all the steps implemented by the method embodiment performed by the second device, and can achieve the same technical effect. Here, the parts and beneficial effects of this embodiment that are the same as those of the method embodiment will not be described in detail.

The terminal device involved in the embodiments of the present disclosure may be a device that provides voice and/or data connectivity to a user, a handheld device with a wireless connection function, or another processing device connected to a wireless modem. In different systems, the name of the terminal device may also be different. For example, in a 5G system, the terminal device may be called a User Equipment (UE). A wireless terminal device may communicate with one or more Core Networks (CN) via a Radio Access Network (RAN). The wireless terminal device may be a mobile terminal device, such as a mobile phone (or "cellular" phone) and a computer with a mobile terminal device. For example, it may be a portable, pocket-sized, handheld, computer-built-in, or vehicle-mounted mobile device that exchanges voice and/or data with the wireless access network. For example, Personal Communication Service (PCS) phones, cordless phones, Session Initiated Protocol (SIP) phones, Wireless Local Loop (WLL) stations, Personal Digital Assistants (PDAs), and other devices. Wireless terminal devices may also be called systems, subscriber units, subscriber stations, mobile stations, mobiles, remote stations, access points, remote terminals, access terminals, user terminals, user agents, user devices, which are not limited in the embodiments of the present disclosure.

The network device (or network-side device) involved in the embodiments of the present disclosure may be a base station, and the base station may include multiple cells providing services for terminals. Depending on specific application scenarios, the base station may also be called an access point, or a device in the access network that communicates with a wireless terminal device through one or more sectors on the air interface, or another name. The network device may be used to exchange received air frames with Internet Protocol (IP) packets, acting as a router between the wireless terminal device and the rest of the access network, where the rest of the access network may include an Internet Protocol (IP) communication network. The network device may also coordinate the attribute management of the air interface. For example, the network device involved in the embodiments of the present disclosure may be a Base Transceiver Station (BTS) in a Global System for Mobile communications (GSM) or Code Division Multiple Access (CDMA), a NodeB in Wide-band Code Division Multiple Access (WCDMA), an evolutional Node B (eNB or e-NodeB) in a Long Term Evolution (LTE) system, a 5G base station (gNB) in a 5G network architecture (next generation system), a base station in a 6G system, a Home evolved Node B (HeNB), a relay node, a femto base station, a pico base station, etc., which are not limited in the embodiments of the present disclosure. In some network structures, the network device may include a Centralized Unit (CU) node and a Distributed Unit (DU) node, and the centralized unit and the distributed unit may also be arranged geographically separately.

MIMO (Multi Input Multi Output) transmission may be performed between the network device and the terminal device using one or more antennas each. The MIMO transmission may be Single User MIMO (SU-MIMO) or Multiple User MIMO (MU-MIMO). According to the form and number of antenna combinations, MIMO transmission may be 2D-MIMO, 3D-MIMO, FD-MIMO, massive-MIMO, or diversity transmission, precoding transmission, beamforming transmission, etc.

The technical solutions provided by the embodiments of the present disclosure can be applied to various systems, especially 5G systems or 6G systems. For example, the applicable systems may be Global System of Mobile communication (GSM) system, Code Division Multiple Access (CDMA) system, Wideband Code Division Multiple Access (WCDMA) Universal Packet Radio Service (GPRS) system, Long Term Evolution (LTE) system, LTE Frequency Division Duplex (FDD) system, LTE Time Division Duplex (TDD) system, Long Term Evolution Advanced (LTE-A) system, Universal Mobile Telecommunication System (UMTS), Worldwide Interoperability for Microwave Access (WiMAX) system, 5G New Radio (NR) system, 6G system, etc. These various systems may include terminal devices and network-side devices. The system may also include a core network part. In some embodiments, these systems include management entities for model lifecycle management and/or data collection.

Those skilled in the art should understand that the embodiments of the present disclosure may be provided as methods, systems, or computer program products. Therefore, the present disclosure may adopt the form of an entirely hardware embodiment, an entirely software embodiment, or an embodiment combining software and hardware aspects. Moreover, the present disclosure may adopt the form of a computer program product implemented on one or more computer-usable storage media (including but not limited to disk storage, optical storage, etc.) containing computer-usable program codes.

The present disclosure is described with reference to flowcharts and/or block diagrams of methods, devices (systems), and computer program products according to the embodiments of the present disclosure. It should be understood that each flow and/or block in the flowcharts and/or block diagrams, and combinations of flows and/or blocks in the flowcharts and/or block diagrams can be implemented by computer-executable instructions. These computer-executable instructions may be provided to a processor of a general-purpose computer, a special-purpose computer, an embedded processor, or other programmable data processing devices to produce a machine, such that the instructions executed by the processor of the computer or other programmable data processing devices produce an apparatus for implementing the functions specified in one or more flows of the flowcharts and/or one or more blocks of the block diagrams.

These processor-executable instructions may also be stored in a processor-readable memory that can guide the computer or other programmable data processing devices to work in a specific manner, such that the instructions stored in the processor-readable memory produce an article of manufacture including an instruction apparatus, which implements the functions specified in one or more flows of the flowcharts and/or one or more blocks of the block diagrams.

These processor-executable instructions may also be loaded onto a computer or other programmable data processing devices, such that a series of operation steps are executed on the computer or other programmable devices to produce computer-implemented processing, thereby the instructions executed on the computer or other programmable devices provide steps for implementing the functions specified in one or more flows of the flowcharts and/or one or more blocks of the block diagrams.

In addition, it should be pointed out that in the apparatuses and methods of the present disclosure, obviously, each component or each step can be decomposed and/or recombined. These decompositions and/or recombinations should be regarded as equivalent solutions of the present disclosure. Moreover, the steps of executing the above series of processes may naturally be executed in the order described in the specification in chronological order, but they do not need to be executed in chronological order. Some steps may be executed in parallel or independently of each other. For those of ordinary skill in the art, it can be understood that all or any steps or components of the methods and apparatuses of the present disclosure can be implemented in any computing device (including processors, storage media, etc.) or a network of computing devices in hardware, firmware, software, or a combination thereof, which can be achieved by those of ordinary skill in the art using their basic programming skills after reading the description of the present disclosure.

It should be noted that the division of the above modules is merely a logical function division. In actual implementation, all or part of the modules may be integrated into a single physical entity, or may be physically separated. Moreover, these modules may all be implemented in the form of software invoked by processing elements; may all be implemented in the form of hardware; or some modules may be implemented in the form of software invoked by processing elements and others in the form of hardware. For example, a certain module may be a separately provided processing element, or may be integrated into one of the chips of the aforementioned apparatus for implementation. In addition, it may also be stored in the memory of the aforementioned apparatus in the form of program code, and invoked by one of the processing elements of the aforementioned apparatus to perform the functions of the aforementioned determining module. The implementation of other modules is similar. Furthermore, all or part of these modules may be integrated together or implemented independently. The processing element described herein may be an integrated circuit with signal processing capabilities. In the implementation process, each step of the above method or each of the above modules may be completed through integrated logic circuits of hardware in the processor element or instructions in the form of software.

For example, each module, unit, sub-unit, or sub-module may be one or more integrated circuits configured to implement the above method, such as: one or more Application Specific Integrated Circuits (ASICs), or one or more Digital Signal Processors (DSPs), or one or more Field Programmable Gate Arrays (FPGAs), etc. For another example, when a certain module is implemented in the form of program code scheduled by a processing element, the processing element may be a general-purpose processor, such as a Central Processing Unit (CPU) or other processors capable of invoking program code. For another example, these modules may be integrated together and implemented in the form of a System-On-a-Chip (SOC).

The terms "first", "second" and the like in the specification and claims of this disclosure are used to distinguish similar objects, and are not necessarily used to describe a specific order or sequence. It should be understood that the terms used in this way can be interchanged under appropriate circumstances so that the embodiments of this disclosure described herein can be implemented in an order other than those illustrated or described herein. In addition, the terms "include" and "have" and any variations thereof are intended to cover non-exclusive inclusion. For example, a process, method, system, product, or device that includes a series of steps or units is not necessarily limited to the clearly listed steps or units, but may include other steps or units that are not clearly listed or are inherent to such process, method, product, or device. In addition, the use of "and/or" in the specification and claims indicates at least one of the connected objects. For example, A and/or B and/or C means including 7 cases: A alone, B alone, C alone, and both A and B exist, both B and C exist, both A and C exist, as well as all of A, B, and C exist. Similarly, the use of "at least one of A and B" in the specification and claims should be understood as "A alone, B alone, or both A and B exist".

Obviously, those skilled in the art can make various modifications and variations to the present disclosure without departing from the spirit and scope of the present disclosure. In this way, if these modifications and variations of the present disclosure fall within the scope of the claims of the present disclosure and their equivalent technologies, the present disclosure also intends to include these modifications and variations.

## Claims

1. An information processing method, performed by a first device, the method comprising:
determining first information corresponding to Channel State Information (CSI), wherein the first information is used to indicate one or more of quality of the CSI, quality of a channel or a channel estimation value corresponding to the CSI, and quality of a precoding matrix corresponding to the CSI;
determining whether to send CSI feedback information to a second device and/or determining the CSI feedback information to be sent to the second device based on the first information.

2. The method according to claim 1, further comprising:
receiving a first reference signal;
determining the CSI based on the first reference signal.

3. The method according to claim 2, wherein the determining first information corresponding to Channel State Information (CSI) comprises:
determining the first information corresponding to the CSI based on configuration information of the first reference signal and/or a second reference signal.

4. The method according to claim 1, wherein the determining whether to send CSI feedback information to a second device and/or determining the CSI feedback information to be sent to the second device based on the first information comprises:
in a case where the first information meets a first condition, not sending the CSI feedback information to the second device or determining that the CSI feedback information to be sent to the second device does not include the CSI;
in a case where the first information meets a second condition, determining to send the CSI feedback information to the second device or determining that the CSI feedback information to be sent to the second device includes the CSI.

5. The method according to any one of claims 1 to 4, wherein the CSI feedback information comprises first indication information, and the first indication information is used to indicate whether the CSI feedback information includes the CSI.

6. The method according to claim 4, wherein the first condition comprises:
a relative relationship between the first information and a first threshold or first reference quality information meets a first relationship;
and/or the second condition comprises:
a relative relationship between the first information and a second threshold or second reference quality information meets a second relationship.

7. The method according to claim 1, wherein the determining the CSI feedback information to be sent to the second device based on the first information comprises:
determining at least one of a codebook parameter, a codebook, or a payload size in the CSI feedback information based on the first information.

8. The method according to claim 1, wherein the determining whether to send CSI feedback information to a second device and/or determining the CSI feedback information to be sent to the second device based on the first information comprises:
determining whether to send the CSI feedback information to the second device and/or determining the CSI feedback information to be sent to the second device based on the first information and a first parameter;
wherein the first parameter comprises at least one of the following:
configuration information of a first reference signal, wherein the first reference signal is a reference signal used to determine the CSI;
position information of the first device;
speed information of the first device.

9. The method according to claim 8, wherein the determining the CSI feedback information to be sent to the second device based on the first information and a first parameter comprises:
determining at least one of a codebook parameter, a codebook, or a payload size in the CSI feedback information based on the first information and the first parameter.

10. The method according to any one of claims 1 to 8, wherein the CSI feedback information comprises second indication information, and the second indication information is used to indicate at least one of a codebook parameter, a codebook, or a payload size.

11. The method according to claim 1, further comprising:
sending the first information.

12. The method according to claim 1, wherein the first information comprises at least one of the following:
channel quality information;
channel information;
quality level information;
error information.

13. The method according to claim 12, wherein the channel quality information comprises at least one of the following:
Signal-to-Interference-Noise Ratio (SINR) or Signal-to-Noise Ratio (SNR);
Reference Signal Received Power (RSRP);
Channel Quality Indicator (CQI).

14. The method according to claim 12, wherein the channel information comprises information used to indicate at least one of the following corresponding to a channel:
delay spread;
angle spread;
average delay;
Doppler;
Doppler spread;
Mean Square Error (MSE);
Normalized Mean Square Error (NMSE);
channel statistics;
distribution information of the channel.

15. The method according to claim 12, wherein the error information comprises at least one of the following:
error information of the CSI;
error information of a channel or a channel estimation value corresponding to the CSI;
error information of a precoding matrix corresponding to the CSI.

16. The method according to claim 15, wherein the error information comprises at least one of the following:
distance error;
MSE, NMSE, or Minimum Mean Square Error (MMSE);
error information of the CQI;
error information of channel statistics.

17. The method according to claim 1, wherein the CSI feedback information comprises CSI feedback information corresponding to the CSI.

18. An information processing method, performed by a second device, the method comprising:
determining CSI feedback information and/or whether the CSI feedback information exists based on configuration information of a first reference signal, a CSI feedback configuration corresponding to the first reference signal and/or first information;
wherein the first information is used to indicate one or more of quality of CSI, quality of a channel or a channel estimation value corresponding to the CSI, and quality of a precoding matrix corresponding to the CSI.

19. The method according to claim 18, wherein the CSI feedback information comprises at least one of the following:
a codebook parameter;
a codebook;
a payload size.

20. The method according to claim 18, further comprising:
obtaining the first information sent by a first device.

21. The method according to any one of claims 18 to 20, wherein the first information is first information corresponding to the configuration information of the first reference signal and/or the CSI feedback configuration corresponding to the first reference signal.

22. The method according to claim 18, wherein the determining CSI feedback information and/or whether the CSI feedback information exists based on the first information comprises:
in a case where the first information meets a first condition, determining that no CSI feedback information exists or determining that the CSI feedback information does not include the CSI corresponding to the first information;
in a case where the first information meets a second condition, determining that the CSI feedback information exists or determining that the CSI feedback information includes the CSI corresponding to the first information.

23. The method according to any one of claims 18 to 22, wherein the CSI feedback information comprises first indication information, and the first indication information is used to indicate whether the CSI feedback information includes the CSI.

24. The method according to claim 22, wherein the first condition comprises:
a relative relationship between the first information and a first threshold or first reference quality information meets a first relationship;
and/or the second condition comprises:
a relative relationship between the first information and a second threshold or second reference quality information meets a second relationship.

25. The method according to claim 18, wherein the determining CSI feedback information and/or whether the CSI feedback information exists based on configuration information of a first reference signal, a CSI feedback configuration corresponding to the first reference signal and/or first information comprises:
determining the CSI feedback information and/or whether the CSI feedback information exists based on at least one of the configuration information of the first reference signal, the CSI feedback configuration corresponding to the first reference signal or the first information, and a second parameter;
wherein the second parameter comprises at least one of the following:
position information of a first device;
speed information of the first device.

26. The method according to claim 25, wherein the determining the CSI feedback information based on at least one of the configuration information of the first reference signal, the CSI feedback configuration corresponding to the first reference signal or the first information, and a second parameter comprises:
determining at least one of a codebook parameter, a codebook, or a payload size in the CSI feedback information based on at least one of the configuration information of the first reference signal, the CSI feedback configuration corresponding to the first reference signal or the first information, and the second parameter.

27. The method according to any one of claims 18 to 26, wherein the CSI feedback information comprises second indication information, and the second indication information is used to indicate at least one of a codebook parameter, a codebook, or a payload size.

28. The method according to claim 18, further comprising at least one of the following:
sending the first reference signal and/or a second reference signal;
sending configuration information of the first reference signal.

29. The method according to claim 18, wherein the first information comprises at least one of the following:
channel quality information;
channel information;
quality level information;
error information.

30. The method according to claim 29, wherein the channel quality information comprises at least one of the following:
Signal-to-Interference-Noise Ratio (SINR) or Signal-to-Noise Ratio (SNR);
Reference Signal Received Power (RSRP);
Channel Quality Indicator (CQI).

31. The method according to claim 29, wherein the channel information comprises information used to indicate at least one of the following corresponding to a channel:
delay spread;
angle spread;
average delay;
Doppler;
Doppler spread;
Mean Square Error (MSE);
Normalized Mean Square Error (NMSE);
channel statistics;
distribution information of the channel.

32. The method according to claim 29, wherein the error information comprises at least one of the following:
error information of the CSI;
error information of a channel or a channel estimation value corresponding to the CSI;
error information of a precoding matrix corresponding to the CSI.

33. The method according to claim 32, wherein the error information comprises at least one of the following:
distance error;
MSE, NMSE, or Minimum Mean Square Error (MMSE);
error information of the CQI;
error information of channel statistics.

34. The method according to claim 18, wherein the CSI feedback information comprises CSI feedback information corresponding to the CSI.

35. An information processing apparatus, comprising a memory, a transceiver, and a processor; wherein,
the memory is configured to store a computer program; the transceiver is configured to send and receive data under control of the processor; the processor is configured to read the computer program in the memory and perform the following operations:
determining first information corresponding to Channel State Information (CSI), wherein the first information is used to indicate one or more of quality of the CSI, quality of a channel or a channel estimation value corresponding to the CSI, and quality of a precoding matrix corresponding to the CSI;
determining whether to send CSI feedback information to a second device and/or determining the CSI feedback information to be sent to the second device based on the first information.

36. The apparatus according to claim 35, wherein the processor further performs the following operations:
receiving a first reference signal;
determining the CSI based on the first reference signal.

37. The apparatus according to claim 36, wherein the processor further performs the following operations:
determining the first information corresponding to the CSI based on configuration information of the first reference signal and/or a second reference signal.

38. The apparatus according to claim 35, wherein the processor further performs the following operations:
in a case where the first information meets a first condition, not sending the CSI feedback information to the second device or determining that the CSI feedback information to be sent to the second device does not include the CSI;
in a case where the first information meets a second condition, determining to send the CSI feedback information to the second device or determining that the CSI feedback information to be sent to the second device includes the CSI.

39. The apparatus according to any one of claims 35 to 38, wherein the CSI feedback information comprises first indication information, and the first indication information is used to indicate whether the CSI feedback information includes the CSI.

40. The apparatus according to claim 38, wherein the first condition comprises:
a relative relationship between the first information and a first threshold or first reference quality information meets a first relationship;
and/or the second condition comprises:
a relative relationship between the first information and a second threshold or second reference quality information meets a second relationship.

41. The apparatus according to claim 35, wherein the processor further performs the following operations:
determining at least one of a codebook parameter, a codebook, or a payload size in the CSI feedback information based on the first information.

42. The apparatus according to claim 35, wherein the processor further performs the following operations:
determining whether to send the CSI feedback information to the second device and/or determining the CSI feedback information to be sent to the second device based on the first information and a first parameter;
wherein the first parameter comprises at least one of the following:
configuration information of a first reference signal, wherein the first reference signal is a reference signal used to determine the CSI;
position information of a first device;
speed information of the first device.

43. The apparatus according to claim 42, wherein the processor further performs the following operations:
determining at least one of a codebook parameter, a codebook, or a payload size in the CSI feedback information based on the first information and the first parameter.

44. The apparatus according to any one of claims 35 to 42, wherein the CSI feedback information comprises second indication information, and the second indication information is used to indicate at least one of a codebook parameter, a codebook, or a payload size.

45. The apparatus according to claim 35, wherein the processor further performs the following operation:
sending the first information.

46. The apparatus according to claim 35, wherein the first information comprises at least one of the following:
channel quality information;
channel information;
quality level information;
error information.

47. The apparatus according to claim 46, wherein the channel quality information comprises at least one of the following:
Signal-to-Interference-Noise Ratio (SINR) or Signal-to-Noise Ratio (SNR);
Reference Signal Received Power (RSRP);
Channel Quality Indicator (CQI).

48. The apparatus according to claim 46, wherein the channel information comprises information used to indicate at least one of the following corresponding to a channel:
delay spread;
angle spread;
average delay;
Doppler;
Doppler spread;
Mean Square Error (MSE);
Normalized Mean Square Error (NMSE);
channel statistics;
distribution information of the channel.

49. The apparatus according to claim 46, wherein the error information comprises at least one of the following:
error information of the CSI;
error information of a channel or a channel estimation value corresponding to the CSI;
error information of a precoding matrix corresponding to the CSI.

50. The apparatus according to claim 49, wherein the error information comprises at least one of the following:
distance error;
MSE, NMSE, or Minimum Mean Square Error (MMSE);
error information of the CQI;
error information of channel statistics.

51. The apparatus according to claim 35, wherein the CSI feedback information comprises CSI feedback information corresponding to the CSI.

52. An information processing apparatus, comprising a memory, a transceiver, and a processor; wherein,
the memory is configured to store a computer program; the transceiver is configured to send and receive data under control of the processor; the processor is configured to read the computer program in the memory and perform the following operations:
determining CSI feedback information and/or whether the CSI feedback information exists based on configuration information of a first reference signal, a CSI feedback configuration corresponding to the first reference signal and/or first information;
wherein the first information is used to indicate one or more of quality of CSI, quality of a channel or a channel estimation value corresponding to the CSI, and quality of a precoding matrix corresponding to the CSI.

53. The apparatus according to claim 52, wherein the CSI feedback information comprises at least one of the following:
a codebook parameter;
a codebook;
a payload size.

54. The apparatus according to claim 52, wherein the processor further performs the following operation:
obtaining the first information sent by a first device.

55. The apparatus according to any one of claims 52 to 54, wherein the first information is first information corresponding to the configuration information of the first reference signal and/or the CSI feedback configuration corresponding to the first reference signal.

56. The apparatus according to claim 52, wherein the processor further performs the following operations:
in a case where the first information meets a first condition, determining that no CSI feedback information exists or determining that the CSI feedback information does not include the CSI corresponding to the first information;
in a case where the first information meets a second condition, determining that the CSI feedback information exists or determining that the CSI feedback information includes the CSI corresponding to the first information.

57. The apparatus according to any one of claims 52 to 56, wherein the CSI feedback information comprises first indication information, and the first indication information is used to indicate whether the CSI feedback information includes the CSI.

58. The apparatus according to claim 56, wherein the first condition comprises:
a relative relationship between the first information and a first threshold or first reference quality information meets a first relationship;
and/or the second condition comprises:
a relative relationship between the first information and a second threshold or second reference quality information meets a second relationship.

59. The apparatus according to claim 52, wherein the determining CSI feedback information and/or whether the CSI feedback information exists based on configuration information of a first reference signal, a CSI feedback configuration corresponding to the first reference signal and/or first information comprises:
determining the CSI feedback information and/or whether the CSI feedback information exists based on at least one of the configuration information of the first reference signal, the CSI feedback configuration corresponding to the first reference signal or the first information, and a second parameter;
wherein the second parameter comprises at least one of the following:
position information of a first device;
speed information of the first device.

60. The apparatus according to claim 59, wherein the processor further performs the following operation:
determining at least one of a codebook parameter, a codebook, or a payload size in the CSI feedback information based on at least one of the configuration information of the first reference signal, the CSI feedback configuration corresponding to the first reference signal or the first information, and the second parameter.

61. The apparatus according to any one of claims 52 to 60, wherein the CSI feedback information comprises second indication information, and the second indication information is used to indicate at least one of a codebook parameter, a codebook, or a payload size.

62. The apparatus according to claim 52, wherein the processor further performs at least one of the following operations:
sending the first reference signal and/or a second reference signal;
sending configuration information of the first reference signal.

63. The apparatus according to claim 52, wherein the first information comprises at least one of the following:
channel quality information;
channel information;
quality level information;
error information.

64. The apparatus according to claim 63, wherein the channel quality information comprises at least one of the following:
Signal-to-Interference-Noise Ratio (SINR) or Signal-to-Noise Ratio (SNR);
Reference Signal Received Power (RSRP);
Channel Quality Indicator (CQI).

65. The apparatus according to claim 63, wherein the channel information comprises information used to indicate at least one of the following corresponding to a channel:
delay spread;
angle spread;
average delay;
Doppler;
Doppler spread;
Mean Square Error (MSE);
Normalized Mean Square Error (NMSE);
channel statistics;
distribution information of the channel.

66. The apparatus according to claim 63, wherein the error information comprises at least one of the following:
error information of the CSI;
error information of a channel or a channel estimation value corresponding to the CSI;
error information of a precoding matrix corresponding to the CSI.

67. The apparatus according to claim 66, wherein the error information comprises at least one of the following:
distance error;
MSE, NMSE, or Minimum Mean Square Error (MMSE);
error information of the CQI;
error information of channel statistics.

68. The apparatus according to claim 52, wherein the CSI feedback information comprises CSI feedback information corresponding to the CSI.

69. An information processing apparatus, comprising:
a first determining unit, configured to determine first information corresponding to Channel State Information (CSI), wherein the first information is used to indicate one or more of quality of the CSI, quality of a channel or a channel estimation value corresponding to the CSI, and quality of a precoding matrix corresponding to the CSI;
a second determining unit, configured to determine whether to send CSI feedback information to a second device and/or determine the CSI feedback information to be sent to the second device based on the first information.

70. The apparatus according to claim 69, further comprising:
a first receiving unit, configured to receive a first reference signal;
a fourth determining unit, configured to determine the CSI based on the first reference signal.

71. The apparatus according to claim 70, wherein the fourth determining unit is configured to determine the first information corresponding to the CSI based on configuration information of the first reference signal and/or a second reference signal.

72. The apparatus according to claim 69, wherein the second determining unit is configured to:
in a case where the first information meets a first condition, not send the CSI feedback information to the second device or determine that the CSI feedback information to be sent to the second device does not include the CSI;
in a case where the first information meets a second condition, determine to send the CSI feedback information to the second device or determine that the CSI feedback information to be sent to the second device includes the CSI.

73. The apparatus according to any one of claims 69 to 72, wherein the CSI feedback information comprises first indication information, and the first indication information is used to indicate whether the CSI feedback information includes the CSI.

74. The apparatus according to claim 72, wherein the first condition comprises:
a relative relationship between the first information and a first threshold or first reference quality information meets a first relationship;
and/or the second condition comprises:
a relative relationship between the first information and a second threshold or second reference quality information meets a second relationship.

75. The apparatus according to claim 69, wherein the second determining unit is configured to:
determine at least one of a codebook parameter, a codebook, or a payload size in the CSI feedback information based on the first information.

76. The apparatus according to claim 69, wherein the second determining unit is configured to:
determine whether to send the CSI feedback information to the second device and/or determine the CSI feedback information to be sent to the second device based on the first information and a first parameter;
wherein the first parameter comprises at least one of the following:
configuration information of a first reference signal, wherein the first reference signal is a reference signal used to determine the CSI;
position information of a first device;
speed information of the first device.

77. The apparatus according to claim 76, wherein the second determining unit is configured to:
determine at least one of a codebook parameter, a codebook, or a payload size in the CSI feedback information based on the first information and the first parameter.

78. The apparatus according to any one of claims 69 to 76, wherein the CSI feedback information comprises second indication information, and the second indication information is used to indicate at least one of a codebook parameter, a codebook, or a payload size.

79. The apparatus according to claim 69, further comprising:
a first sending unit, configured to send the first information.

80. The apparatus according to claim 69, wherein the first information comprises at least one of the following:
channel quality information;
channel information;
quality level information;
error information.

81. The apparatus according to claim 80, wherein the channel quality information comprises at least one of the following:
Signal-to-Interference-Noise Ratio (SINR) or Signal-to-Noise Ratio (SNR);
Reference Signal Received Power (RSRP);
Channel Quality Indicator (CQI).

82. The apparatus according to claim 80, wherein the channel information comprises information used to indicate at least one of the following corresponding to a channel:
delay spread;
angle spread;
average delay;
Doppler;
Doppler spread;
Mean Square Error (MSE);
Normalized Mean Square Error (NMSE);
channel statistics;
distribution information of the channel.

83. The apparatus according to claim 80, wherein the error information comprises at least one of the following:
error information of the CSI;
error information of a channel or a channel estimation value corresponding to the CSI;
error information of a precoding matrix corresponding to the CSI.

84. The apparatus according to claim 83, wherein the error information comprises at least one of the following:
distance error;
MSE, NMSE, or Minimum Mean Square Error (MMSE);
error information of the CQI;
error information of channel statistics.

85. The apparatus according to claim 69, wherein the CSI feedback information comprises CSI feedback information corresponding to the CSI.

86. An information processing apparatus, comprising:
a third determining unit, configured to determine CSI feedback information and/or whether the CSI feedback information exists based on configuration information of a first reference signal, a CSI feedback configuration corresponding to the first reference signal and/or first information;
wherein the first information is used to indicate one or more of quality of CSI, quality of a channel or a channel estimation value corresponding to the CSI, and quality of a precoding matrix corresponding to the CSI.

87. The apparatus according to claim 86, wherein the CSI feedback information comprises at least one of the following:
a codebook parameter;
a codebook;
a payload size.

88. The apparatus according to claim 86, further comprising:
an obtaining unit, configured to obtain the first information sent by a first device.

89. The apparatus according to any one of claims 86 to 88, wherein the first information is first information corresponding to the configuration information of the first reference signal and/or the CSI feedback configuration corresponding to the first reference signal.

90. The apparatus according to claim 86, wherein the third determining unit is configured to:
in a case where the first information meets a first condition, determine that no CSI feedback information exists or determine that the CSI feedback information does not include the CSI corresponding to the first information;
in a case where the first information meets a second condition, determine that the CSI feedback information exists or determine that the CSI feedback information includes the CSI corresponding to the first information.

91. The apparatus according to any one of claims 86 to 90, wherein the CSI feedback information comprises first indication information, and the first indication information is used to indicate whether the CSI feedback information includes the CSI.

92. The apparatus according to claim 90, wherein the first condition comprises:
a relative relationship between the first information and a first threshold or first reference quality information meets a first relationship;
and/or the second condition comprises:
a relative relationship between the first information and a second threshold or second reference quality information meets a second relationship.

93. The apparatus according to claim 86, wherein the third determining unit is configured to:
determine the CSI feedback information and/or whether the CSI feedback information exists based on at least one of the configuration information of the first reference signal, the CSI feedback configuration corresponding to the first reference signal or the first information, and a second parameter;
wherein the second parameter comprises at least one of the following:
position information of a first device;
speed information of the first device.

94. The apparatus according to claim 93, wherein the third determining unit is configured to:
determine at least one of a codebook parameter, a codebook, or a payload size in the CSI feedback information based on at least one of the configuration information of the first reference signal, the CSI feedback configuration corresponding to the first reference signal or the first information, and the second parameter.

95. The apparatus according to any one of claims 86 to 94, wherein the CSI feedback information comprises second indication information, and the second indication information is used to indicate at least one of a codebook parameter, a codebook, or a payload size.

96. The apparatus according to claim 86, further comprising: a second sending unit configured to perform at least one of the following:
sending the first reference signal and/or a second reference signal;
sending configuration information of the first reference signal.

97. The apparatus according to claim 86, wherein the first information comprises at least one of the following:
channel quality information;
channel information;
quality level information;
error information.

98. The apparatus according to claim 97, wherein the channel quality information comprises at least one of the following:
Signal-to-Interference-Noise Ratio (SINR) or Signal-to-Noise Ratio (SNR);
Reference Signal Received Power (RSRP);
Channel Quality Indicator (CQI).

99. The apparatus according to claim 97, wherein the channel information comprises information used to indicate at least one of the following corresponding to a channel:
delay spread;
angle spread;
average delay;
Doppler;
Doppler spread;
Mean Square Error (MSE);
Normalized Mean Square Error (NMSE);
channel statistics;
distribution information of the channel.

100. The apparatus according to claim 97, wherein the error information comprises at least one of the following:
error information of the CSI;
error information of a channel or a channel estimation value corresponding to the CSI;
error information of a precoding matrix corresponding to the CSI.

101. The apparatus according to claim 100, wherein the error information comprises at least one of the following:
distance error;
MSE, NMSE, or Minimum Mean Square Error (MMSE);
error information of the CQI;
error information of channel statistics.

102. The apparatus according to claim 86, wherein the CSI feedback information comprises CSI feedback information corresponding to the CSI.

103. A processor-readable storage medium, storing a computer program, wherein the computer program is configured to cause a processor to perform the steps of the information processing method according to any one of claims 1 to 17, or perform the steps of the information processing method according to any one of claims 18 to 34.
